# EUROPEAN PATENT APPLICATION

(11) **EP 4 607 975 A1**
(43) Date of publication of application: **27.08.2025**
(21) Application number: 23887837.5
(22) Date of filing: 30.10.2023
(51) Int. Cl.: H04W 4/50, H04W 16/18

(54) **METHOD FOR ACQUIRING EDGE COMPUTING SERVICE, AND COMMUNICATION SYSTEM AND APPARATUS**

(30) Priority: 07.11.2022 CN 202211385370
(71) Applicant: Huawei Technologies Co., Ltd., Shenzhen, Guangdong 518129 (CN)
(72) Inventor: HU, Yajie, Shenzhen, Guangdong 518129 (CN); YANG, Yanmei, Shenzhen, Guangdong 518129 (CN); GE, Cuili, Shenzhen, Guangdong 518129 (CN)
(74) Representative: Pfenning, Meinig & Partner mbB
(86) International application number: PCT/CN2023/127925
(87) International publication number: WO 2024/099147

(57) **Abstract**

This application provides a method for obtaining an edge computing service, and a communication system and apparatus, and is applied to the field of communication technologies. The method for obtaining an edge computing service includes: A first EEC sends information about at least one EES to a first EES, where the at least one EES can provide an edge computing service for the first EEC; and the first EEC receives information about at least one EAS from the first EES, where the at least one EAS is associated with the first EES and/or the at least one EES, and the at least one EAS can provide the edge computing service for a first AC. According to the method, the first AC can flexibly obtain the edge computing service.

## Description

This application claims priority to Chinese Patent Application No. 202211385370.2, filed with the China National Intellectual Property Administration on November 7, 2022 and entitled "METHOD FOR OBTAINING EDGE COMPUTING SERVICE, AND COMMUNICATION SYSTEM AND APPARATUS", which is incorporated herein by reference in its entirety.

### TECHNICAL FIELD

This application relates to the field of communication technologies, and in particular, to a method for obtaining an edge computing service, and a communication system and apparatus.

### BACKGROUND

In an edge (EDGE) application architecture specified in an existing standard, an edge enabler client (edge enabler client, EEC) on a user equipment (user equipment, UE) side discovers an edge enabler server (edge enabler server, EES) in an edge data network (edge data network, EDN) using an edge configuration server (edge configuration server, ECS). Further, the EEC may discover an edge application server (edge application server, EAS) using the EES. Then, an application client (application client, AC) on the UE side may establish a connection to the EAS, and obtain service data from the EAS.

However, as the EAS discovery manner is not flexible enough currently, it is difficult to apply to a complex network architecture.

### SUMMARY

This application provides a method for obtaining an edge computing service, and a communication system and apparatus, to resolve a problem that an EAS discovery manner is not flexible enough in a conventional technology.

To achieve the foregoing objective, the following technical solutions are used in this application.

According to a first aspect, a method for obtaining an edge computing service is provided. The method may be applied to a first EEC, and the method may include: The first EEC may send information about at least one EES to a first entity, where the at least one EES can provide an edge computing service for the first EEC; and the first EEC may further receive information about at least one EAS from the first entity, where the at least one EAS corresponds to the at least one EES, and the at least one EAS can provide the edge computing service for a first AC. Based on this solution, the first EEC may obtain at least one EAS that can provide the edge computing service for the first AC, so that the first EEC can select, from the at least one EAS, an EAS configured to provide the edge computing service for the first AC. This method can improve flexibility of selecting the EAS by an EEC.

With reference to the first aspect, in a possible implementation, the first entity may be a first EES.

With reference to the first aspect, in a possible implementation, the first EEC is an edge enabler client deployed in first UE, the first AC is an application client deployed in the first UE, and the first EEC, the first AC, and the first UE may be considered as a same body. It may be referred to that the first AC corresponds to the first EEC.

With reference to the first aspect, in a possible implementation, the method may further include: The first EEC sends information about a first group to the first EES, where the information about the first group may be used to determine an EAS that provides the edge computing service for UE included in the first group. Based on this, the solutions of this application may be further used to determine a common EAS for a group of UEs.

With reference to the first aspect, in a possible implementation, the first group may include the first UE.

With reference to the first aspect, in a possible implementation, the information about the first group includes a group identifier and/or a UE list. The UE list is a list of UEs included in the first group.

With reference to the first aspect, in a possible implementation, the method may further include: The first EEC receives the information about the first group, where the information about the first group is associated with a first EAS in the at least one EAS, and the first EAS can provide the edge computing service for the UE included in the first group.

With reference to the first aspect, in a possible implementation, information about the first EAS and the information about the first group may be received together, to reflect a correspondence between the first EAS and the first group, so that the first EEC can learn that the first EAS can provide the edge computing service for the UE included in the first group.

With reference to the first aspect, in a possible implementation, the method may further include: The first EEC determines, based on the correspondence between the first EAS and the first group, the first EAS as the EAS that can provide the edge computing service for the first AC.

With reference to the first aspect, in a possible implementation, the first EAS corresponds to a second EES in the at least one EES, and the second EES can provide the edge computing service for the UE included in the first group.

With reference to the first aspect, in a possible implementation, the method may further include: The first EEC determines the first EAS in the at least one EAS as the EAS that can provide the edge computing service for the UE included in the first group.

With reference to the first aspect, in a possible implementation, the method may further include: The first EEC sends the information about the first EAS to the first EES.

With reference to the foregoing first aspect, in a possible implementation, the first EEC may send the information about the first EAS determined by the first EEC and the information about the first group together to the first EES. This implementation may reflect the correspondence between the first EAS and the first group, so that the first EES learns that the first EAS can provide the edge computing service for the UE included in the first group.

With reference to the first aspect, in a possible implementation, the first EAS corresponds to the first EES, and the first EAS is an EAS registered to the first EES.

With reference to the first aspect, in a possible implementation, the method may further include: The first EEC may send first service information to the first EES, where the first service information is used to determine the at least one EAS.

With reference to the first aspect, in a possible implementation, the first service information is service information corresponding to the first AC.

With reference to the first aspect, in a possible implementation, information about any EES in the information about the at least one EES may include at least one of the following: identification information of the EES, address information of the EES, or deployment information corresponding to the EES.

With reference to the first aspect, in a possible implementation, the deployment information corresponding to the EES may include at least one of the following: EDN information of the EES, a topology service range of the EES, a geographic service range of the EES, a DNAI corresponding to the EES, or a level to which the EES belongs.

With reference to the first aspect, in a possible implementation, information about any EAS in the information about the at least one EAS may include at least one of the following: address information of the EAS, identification information of the EAS, or endpoint information of the EAS.

With reference to the first aspect, in a possible implementation, the endpoint information of the EAS may include at least one of the following: an EAS URI, an FQDN, or an IP address.

With reference to the first aspect, in a possible implementation, the method further includes: The first EEC sends location information of the first UE to the first ECS, where the first EEC and the first AC are deployed in the first UE.

With reference to the first aspect, in a possible implementation, the method may further include: The first EEC receives information about the at least one EES from the first ECS.

With reference to the first aspect, in a possible implementation, the method may further include: The first EEC determines, based on the information about the at least one EES received by the first EEC from the first ECS, the information about the at least one EES sent by the first EEC to the first entity. For example, the information about the at least one EES received by the first EEC from the first ECS may be recorded as information about m EESs, and the information about the at least one EES sent by the first EEC to the first EES may be recorded as information about n EESs. Therefore, the information about the n EESs is determined from the information about the m EESs.

With reference to the first aspect, in a possible implementation, the method may further include: The first EEC may send the location information of the first UE to the first ECS, where the first EEC and the first AC are deployed in the first UE, and the location information of the first UE may be used to enable the first ECS to determine the information about the at least one EES.

With reference to the first aspect, in a possible implementation, the method may further include: The first EEC may further send EDN information, edge computing service level information, or EES service level information expected by the first UE to the first ECS, where the EDN information, the edge computing service level information, or the EES service level information expected by the first UE may also be used to enable the first ECS to determine the information about the at least one EES.

With reference to the first aspect, in a possible implementation, the method may further include: The first EEC may further send the information about the first group to the first ECS, where the information about the first group may be used to determine the information about the at least one EES.

According to a second aspect, a method for obtaining an edge computing service is provided. The method may be applied to a first EES, and the method may include: A first edge enabler server EES receives information about at least one EES from a second entity, where the information about the at least one EES is configured to determine an EES that can provide an edge computing service for the second entity.

With reference to the second aspect, in a possible implementation, the second entity is a first EEC.

With reference to the second aspect, in a possible implementation, the method may further include: The first EES obtains information about at least one EAS, where the at least one EAS can provide the edge computing service for a first AC.

With reference to the second aspect, in a possible implementation, the first EEC is an edge enabler client deployed in first UE, the first AC is an application client deployed in the first UE, and the first EEC, the first AC, and the first UE may be considered as a same body. In addition, it may be referred to that the first AC corresponds to the first EEC.

With reference to the second aspect, in a possible implementation, the method may further include: The first EES sends the information about the at least one EAS to the first EEC.

With reference to the second aspect, in a possible implementation, the method may further include: The first EES receives information about a first group from the first EEC, where the information about the first group indicates information about UE included in the first group.

With reference to the second aspect, in a possible implementation, the method may further include: The first EES sends the information about the first group to the at least one EES.

With reference to the second aspect, in a possible implementation, the information about the first group includes a group identifier and/or a UE list.

With reference to the second aspect, in a possible implementation, the first group may include the first UE in which the first EEC and the first AC is located.

With reference to the second aspect, in a possible implementation, the method further includes: The first EES sends, to the first EEC, information about a first group associated with a first EAS, where the first EAS is an EAS in the at least one EAS, and the first EAS can provide the edge computing service for the UE included in the first group.

With reference to the second aspect, in a possible implementation, the first EAS may correspond to the first EES, and information about the first EAS may be determined by the first EES.

With reference to the second aspect, in a possible implementation, the first EAS may correspond to a second EES in the at least one EES, and the second EES can provide the edge computing service for the UE included in the first group, where the information about the first EAS may be received by the first EES from the second EES, or the information about the first EAS is received by the first EES from the second EES via a third EES, where the third EES is configured to relay communication between the first EES and the second EES.

With reference to the second aspect, in a possible implementation, the method may further include: The first EES receives the information about the first EAS from the first EEC, where the first EAS belongs to the at least one EAS, and the first EAS can provide the edge computing service for the UE included in the first group.

With reference to the second aspect, in a possible implementation, the method may further include: The first EES sends the information about the first EAS to the at least one EES.

With reference to the second aspect, in a possible implementation, the method may further include: The first EES receives first service information from the first EEC, where the first service information is used to determine the at least one EAS.

With reference to the second aspect, in a possible implementation, the method may further include: The first EES sends the first service information to the at least one EES.

With reference to the second aspect, in a possible implementation, information about any EES in the information about the at least one EES may include at least one of the following: identification information of the EES, address information of the EES, or deployment information corresponding to the EES.

With reference to the second aspect, in a possible implementation, the deployment information corresponding to the EES may include at least one of the following: EDN information of the EES, a topology service range of the EES, a geographic service range of the EES, a DNAI corresponding to the EES, or a level to which the EES belongs.

With reference to the second aspect, in a possible implementation, information about any EAS in the information about the at least one EAS includes at least one of the following: address information of the EAS, identification information of the EAS, or endpoint information of the EAS.

With reference to the second aspect, in a possible implementation, the endpoint information of the EAS may include at least one of the following: an EAS URI, an FQDN, or an IP address.

According to a third aspect, a method for obtaining an edge computing service is provided. The method may be applied to a second EES, and the method may include: The second EES receives information about a first group from a third entity, where the information about the first group may be used to determine an EAS that provides an edge computing service for UE included in the first group.

With reference to the third aspect, in a possible implementation, the third entity is a first EES.

With reference to the third aspect, in a possible implementation, the method may further include: The second EES sends information about a first EAS to the first EES, where the first EAS is configured to provide the edge computing service for the UE included in the first group.

With reference to the third aspect, in a possible implementation, the information about the first group is received by the second EES via a third EES. The method may further include: The second EES sends the information about the first EAS to the first EES via the third EES, where the first EAS is configured to provide the edge computing service for the UE included in the first group.

With reference to the third aspect, in a possible implementation, the first EAS corresponds to the second EES, and the information about the first EAS is determined by the second EES.

Based on the foregoing two implementations, the information about the first EAS may be determined and delivered to the first EES by the second EES.

With reference to the third aspect, in a possible implementation, the method may further include: The second EES receives the information about the first EAS from the first EES, where the first EAS can provide the edge computing service for the UE included in the first group. Based on this solution, the information about the first EAS may be received by the second EES from the first EES.

With reference to the third aspect, in a possible implementation, the information about the first EAS and the information about the first group may be received by the second EES together, so that the second EES learns that the first EAS can provide the edge computing service for the UE included in the first group.

With reference to the third aspect, in a possible implementation, the method may further include: The second EES receives first service information from the first EES, where the first service information is used to determine the first EAS.

With reference to the third aspect, in a possible implementation, the information about the first EAS may include at least one of the following: address information of the first EAS, identification information of the first EAS, or endpoint information of the first EAS.

With reference to the third aspect, in a possible implementation, the endpoint information of the first EAS may include at least one of the following: an EAS URI, an FQDN, or an IP address.

According to a fourth aspect, a method for obtaining an edge computing service is provided. The method may be applied to a first ECS, and the method may include: The first ECS sends information about at least one EES to a fourth entity, where the at least one EES can provide an edge computing service for the fourth entity.

With reference to the fourth aspect, in a possible implementation, the fourth entity is a first EEC.

With reference to the fourth aspect, in a possible implementation, information about any EES in the information about the at least one EES may include at least one of the following: identification information of the EES, address information of the EES, or deployment information corresponding to the EES.

With reference to the fourth aspect, in a possible implementation, the deployment information corresponding to the EES includes at least one of the following: EDN information of the EES, a topology service range of the EES, a geographic service range of the EES, a DNAI corresponding to the EES, or a level to which the EES belongs.

With reference to the fourth aspect, in a possible implementation, the method may further include: The first ECS receives location information of first UE from the first EEC, where the location information of the first UE is used to determine the information about the at least one EES.

With reference to the fourth aspect, in a possible implementation, the method may further include: The first ECS receives, from the first EEC, EDN information, edge computing service level information, or EES service level information expected by the first UE, where the EDN information, the edge computing service level information, or the EES service level information expected by the first UE is used to determine the information about the at least one EES.

With reference to the fourth aspect, in a possible implementation, that the first ECS determines information about a plurality of EESs based on the location information of the first UE may specifically include: The first ECS determines, based on the location information of the first UE, an EDN available to the first UE. Then, the first ECS may determine, according to policy information, the information about the plurality of EESs from the EDN available to the first UE.

With reference to the fourth aspect, in a possible implementation, the method may further include: The first ECS determines the information about the at least one EES based on information about a first AC.

With reference to the fourth aspect, in a possible implementation, the information about the first AC may include at least one of the following: an identifier of the first AC, a type of the first AC, a service KPI needed by the first AC, and identification information of an EAS needed by the first AC, or a service KPI of an EAS needed by the first AC.

With reference to the fourth aspect, in a possible implementation, the method may further include: The first ECS receives information about a first group from the first EEC, where the information about the first group may be used to determine the information about the at least one EES.

According to a fifth aspect, a method for obtaining an edge computing service is provided. The method may be applied to a second EEC, and the method may include: The second EEC sends information about a second group to a fourth EES, where the information about the second group is used to determine an EAS that provides an edge computing service for UE included in the second group. The second EEC receives information about a second EAS from the fourth EES, where the second EAS can provide the edge computing service for the UE included in the second group.

With reference to the fifth aspect, in a possible implementation, the method may further include: The second EEC sends second service information to the at least one EES, where the second service information may further be used to determine the EAS that provides the edge computing service for the UE included in the second group.

With reference to the fifth aspect, in a possible implementation, the second EAS corresponds to the fourth EES, and the information about the second EAS is determined by the fourth EES.

With reference to the fifth aspect, in a possible implementation, the second EEC is an edge enabler client deployed in second UE, a second AC is an application client deployed in the second UE, and the second EEC, the second AC, and the second UE may be considered as a same body. In addition, it may be referred to that the second AC corresponds to the second EEC.

With reference to the fifth aspect, in a possible implementation, the second group may include the second UE.

According to a sixth aspect, a method for obtaining an edge computing service is provided. The method may be applied to a fourth EES, and the method may include: The fourth EES receives information about a second group from a second EEC, where the information about the second group indicates information about UE included in the second group. The fourth EES sends information about a second EAS to the second EEC, where the second EAS can provide an edge computing service for the UE included in the second group.

With reference to the sixth aspect, in a possible implementation, the method may further include: The fourth EES receives second service information from the second EEC, where the second service information may be used to determine the second EAS.

With reference to the sixth aspect, in a possible implementation, the second EAS corresponds to the fourth EES, and the information about the second EAS is determined by the fourth EES.

With reference to the sixth aspect, in a possible implementation, the second EEC is an edge enabler client deployed in second UE, a second AC is an application client deployed in the second UE, and the second EEC, the second AC, and the second UE may be considered as a same body. In addition, it may be referred to that the second AC corresponds to the second EEC.

With reference to the sixth aspect, in a possible implementation, the second group may include the second UE.

According to a seventh aspect, a communication apparatus is provided, to implement the foregoing methods. The communication apparatus may be the first EEC in the first aspect, the first EES in the second aspect, the second EES in the third aspect, the first ECS in the fourth aspect, the second EEC in the fifth aspect, or the fourth EES in the sixth aspect. The communication apparatus may include a corresponding module, unit, or means (means) for implementing the foregoing methods. The module, unit, or means may be implemented by hardware, software, or hardware executing corresponding software. The hardware or software includes one or more modules or units corresponding to the foregoing functions.

In a possible implementation, the communication apparatus includes a processing module and a transceiver module. The transceiver module is configured to perform message receiving and sending operations performed by a communication apparatus side in the method according to the first aspect, the second aspect, the third aspect, the fourth aspect, the fifth aspect, the sixth aspect, or the seventh aspect. The processing module is configured to invoke instructions to perform a message processing or control operation performed by the communication apparatus side in the method according to the first aspect, the second aspect, the third aspect, the fourth aspect, the fifth aspect, the sixth aspect, or the seventh aspect.

According to an eighth aspect, a communication apparatus is provided. The communication apparatus includes a processor, and the processor is configured to: be coupled to a memory, and after reading computer instructions stored in the memory, perform the method according to the first aspect, the second aspect, the third aspect, the fourth aspect, the fifth aspect, the sixth aspect, or the seventh aspect based on the instructions.

In a possible implementation, the communication apparatus further includes a memory, and the memory is configured to store computer instructions.

In a possible implementation, the communication apparatus further includes a communication interface, and the communication interface is used by the communication apparatus to communicate with another device. For example, the communication interface may be a transceiver, an input/output interface, an interface circuit, an output circuit, an input circuit, a pin, a related circuit, or the like.

In a possible implementation, the communication apparatus may be a chip or a chip system. When the communication apparatus is the chip system, the communication apparatus may include a chip, or may include a chip and another discrete component.

In a possible implementation, when the communication apparatus is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a ninth aspect, a computer-readable storage medium is provided. The computer-readable storage medium stores instructions, and when the instructions are run on a computer, the computer is enabled to perform the method according to the first aspect, the second aspect, the third aspect, the fourth aspect, the fifth aspect, the sixth aspect, or the seventh aspect.

According to a tenth aspect, a computer program product including instructions is provided. When the computer program product runs on a computer, the computer is enabled to perform the method according to the first aspect, the second aspect, the third aspect, the fourth aspect, the fifth aspect, the sixth aspect, or the seventh aspect.

According to an eleventh aspect, a communication system is provided. The communication system includes a first EEC that performs the method for obtaining an edge computing service according to the first aspect and a first EES that performs the method for obtaining an edge computing service according to the second aspect.

In a possible implementation, the communication system may further include a second EES that performs the method for obtaining an edge computing service according to the third aspect.

In a possible implementation, the communication system may further include a first ECS that performs the method for obtaining an edge computing service according to the fourth aspect.

For technical effects brought by any possible implementation of the seventh aspect to the eleventh aspect, refer to technical effects brought by different implementations of the first aspect, the second aspect, the third aspect, the fourth aspect, the fifth aspect, the sixth aspect, or the seventh aspect. Details are not described herein again.

### BRIEF DESCRIPTION OF DRAWINGS

FIG. 1 is a diagram of a structure of an edge application architecture and a functional model according to an embodiment of this application;
FIG. 2 is a schematic of an EES platform discovery and EAS discovery procedure according to an embodiment of this application;
FIG. 3 is a diagram of a structure of an edge network according to an embodiment of this application;
FIG. 4 is a flowchart of discovering and determining an EAS according to an embodiment of this application;
FIG. 5 is a schematic of a level relationship of EDNs according to an embodiment of this application;
FIG. 6 is a schematic flowchart of a method for obtaining an edge computing service according to an embodiment of this application;
FIG. 7 is a schematic flowchart of obtaining deployment information of an EES by an ECS according to an embodiment of this application;
FIG. 8 is a schematic flowchart of a method for obtaining an edge computing service according to an embodiment of this application;
FIG. 9 is a schematic flowchart of a method for obtaining an edge computing service according to an embodiment of this application;
FIG. 10 is a schematic flowchart of a method for obtaining an edge computing service according to an embodiment of this application;
FIG. 11 is a schematic of another level relationship of EDNs according to an embodiment of this application;
FIG. 12 is a schematic flowchart of a method for obtaining an edge computing service according to an embodiment of this application;
FIG. 13 is a schematic flowchart of a method for obtaining an edge computing service according to an embodiment of this application;
FIG. 14 is a schematic flowchart of a method for obtaining an edge computing service according to an embodiment of this application;
FIG. 15 is a schematic flowchart of a method for obtaining an edge computing service according to an embodiment of this application;
FIG. 16 is a schematic flowchart of a method for obtaining an edge computing service according to an embodiment of this application;
FIG. 17 is a schematic flowchart of a method for obtaining an edge computing service according to an embodiment of this application;
FIG. 18 is a schematic flowchart of a method for obtaining an edge computing service according to an embodiment of this application;
FIG. 19 is a schematic flowchart of a method for obtaining an edge computing service according to an embodiment of this application;
FIG. 20 is a schematic flowchart of a method for obtaining an edge computing service according to an embodiment of this application;
FIG. 21 is a diagram of a structure of a communication apparatus according to an embodiment of this application; and
FIG. 22 is a diagram of a structure of a communication apparatus according to an embodiment of this application.

### DESCRIPTION OF EMBODIMENTS

Before embodiments of this application are described, technical terms and a related technology in this application are explained and described. It should be noted that the following explanations and descriptions are intended to make embodiments of this application easier to understand, but should not be considered as a limitation on the protection scope claimed in embodiments of this application.

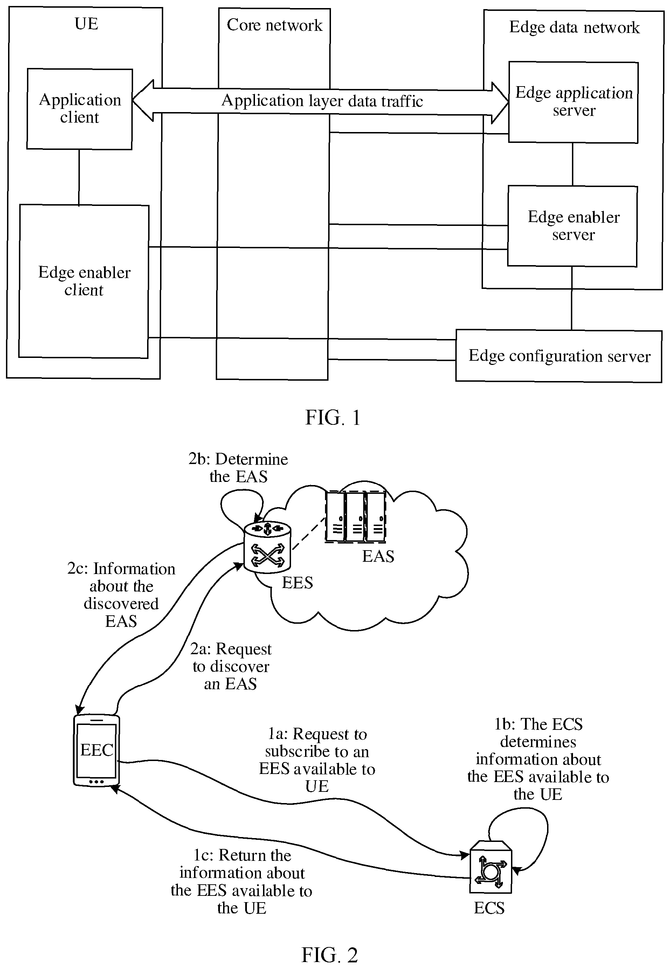

Currently, 3GPP SA6 is conducting research on application-enabled mobile edge computing (mobile edge computing, MEC), and defines an edge (EDGE) application architecture and a functional model, which may be shown in FIG. 1. Function entities in the edge application architecture and the functional model are described as follows:

Edge data network (EDN): In a general understanding, the EDN corresponds to only one data network, is a special local data network (local data network), includes an edge enabler function, and may be identified by using a data network access identifier (data network access identifier, DNAI) and a data network name (data network name, DNN). The edge data network is a network logical concept. In another understanding of the EDN, the EDN is a peer-to-peer concept of a center cloud, and may be understood as a local data center (a geographical location concept). The EDN may be identified by using the DNAI, and may include a plurality of local data networks. The EDN may be used to provide an edge service, and an application deployed in the edge data network is referred to as an application instance or an edge application. The application instance or the edge application may be an instance (instance) that is of an application (for example, social media software, augmented reality (augmented reality, AR), or virtual reality (virtual reality, VR)) and that is deployed and runs on the EDN.

Edge application server (EAS): The EAS is deployed in the EDN and is configured to carry the instance that is of the application and that is deployed and runs in the EDN. For one application, one or more EASs may be deployed in one or more EDNs. The EASs deployed and running in different EDNs can be considered as different EASs of the application. The EASs can share a same domain name and a same IP address or different IP addresses. The EAS may also be referred to as an edge application (server), an application instance, an edge application instance, an MEC application (server), an EAS function, or the like.

Edge enabler server (EES): The EES is deployed in the EDN and can provide some enabler capabilities for an application instance in the EDN. The EES can support registration of the application instance, and authentication and authorization on UE, and provide IP address information of the application instance and the like for the UE. The EES may further support obtaining an identifier and the IP address information of the application instance, and further send the identifier and the IP address information of the application instance to an ECS. Generally, when an EAS is registered to an EES, or information about an EAS is configured on an EES over a management system, the EES is referred to as an EES associated with the EAS. The EES may be configured to control and manage registration, or configure the EAS associated with the EES.

Application client (AC): The application client is a client program of an application on a terminal side. An application user (user) may obtain an application service from an application server via the application client. The application client may be connected to an application server on a cloud to obtain an application service, or may be connected to the EAS deployed and running in the one or more EDNs to obtain an application service. The application client is deployed in the UE, and may be considered as a peer entity of the EAS on a UE side.

Edge enabler client (EEC): The EEC is configured to: register information about the EEC and information about the application client with the EES, perform security authentication and authorization, obtain the IP address of the EAS from the EES, and provide an edge computing enabler capability for the application client. For example, an EAS discovery service returns the IP address of the EAS to the application client. The EEC is deployed in the UE, and may be considered as a peer entity of the EES on the UE side.

Edge configuration server (ECS): The edge configuration server is responsible for configuration of the EDN, for example, providing information about the EES for the UE. The edge configuration server may further directly provide information about the application instance for the UE, and interact with a DNS of the application to obtain the information about the application instance. The edge configuration server further obtains and stores the information about the application instance and the information about the IP address from another function entity.

Based on the foregoing EDGE application architecture, the application user may log in to the AC on the UE, and establish a connection to the EAS through the AC to perform communication, to obtain an application service.

Refer to the EDGE application architecture shown in FIG. 1. Because the edge enabler client is deployed in the UE, interaction between another device and the edge enabler client may also be considered as interaction between the another device and the UE. Therefore, in descriptions of message exchange and the like in this application, the edge enabler client may alternatively be replaced with the UE. In embodiments of this application, unless otherwise specified, the edge enabler client and the UE are interchangeable.

Specific names of the edge enabler client, the edge data network, the edge configuration server, the edge application server, and the edge enabler server are not limited in embodiments of this application. For example, in a 5G communication system, the edge enabler client may be the EEC. In a future communication system (for example, a 6G communication system), the edge enabler client may also have another name. For ease of description, in this application, an example in which the edge enabler client may be the EEC, the edge data network may be the EDN, the edge configuration server may be the ECS, the edge application server may be the EAS, and the edge enabler server may be the EES is used. To be specific, all EECs described subsequently in this application may be replaced with edge enabler clients, all EDNs may be replaced with edge data networks, all ECSs may be replaced with edge configuration servers, all EASs may be replaced with edge application servers, and all EESs may be replaced with edge enabler servers.

An application context transfer procedure based on the foregoing EDGE application architecture may mainly include the following four phases:
(1) Detection of application context transfer: The detection of the application context transfer means determining that the context transfer may need to be performed. In this case, a detection entity detects some events, for example, a location change of the UE or an update of a user plane path of the UE.
(2) Decision of application context transfer: A decision entity determines that the context transfer needs to be performed.
(3) Execution of application context transfer: The execution of the application context transfer mainly transfers a context of an application from a source EAS to a target EAS. The execution of the application context transfer may further include notifying a terminal of information about the target EAS, and notifying a network of completion of the context transfer and related information of the target EAS (such as an address of the target EAS and routing information corresponding to the target EAS).
   After the application context transfer, the application client may switch the connection to the target EAS.
(4) Cleanup after application context transfer: The cleanup relates to a plurality of entities. After the connection of the application client is switched, an entity related to the source EAS can clean up/release an application context.

The 3GPP SA6 standard defines an EES platform discovery and EAS discovery procedure. In terms of an architecture and a function, a two-level discovery mechanism is designed and used: discovering an EES from an ECS and then discovering an EAS from the EES. FIG. 2 is a schematic of an EES platform discovery and EAS discovery procedure according to this application. Step 1a to step 1c are a procedure in which an EEC on a terminal side discovers an EES from an ECS, and step 2a to step 2c are a procedure in which the EEC discovers an EAS from the EES.

The EEC on the terminal side discovers the EES from the ECS:
Step 1a: The EEC sends a request message to the ECS to request to subscribe to an EES available to UE.

Optionally, the request message may carry information such as identification information of the EEC, a security credential, an AC profile (profile), a UE identifier (identifier, ID), and location information of the UE. The AC profile may include at least one of the following information: an AC identifier (ACID), an AC type, an expected AC geographic service area, an EASID of an EAS that can provide a service for the AC, an expected AC service key performance indicator (key performance indicator, KPI), and a minimum service KPI needed by the AC.

In this embodiment of this application, the EEC and the AC are entities deployed in the UE, and actions performed by the EEC, the AC, and the UE may be considered as being performed by a same body. It may be considered that an EEC and an AC that are deployed in same UE "correspond" to each other. An AC corresponding to the EEC is the AC deployed in the same UE as the EEC, or the EEC is connected to the AC, or the EEC provides a service for the AC. This is uniformly described herein, and details are not described below again.

Therefore, that the EEC requests the ECS to subscribe to the EES may be considered as that the EEC requests the ESC to subscribe to an EES available to the EEC, or the EEC requests the ESC to subscribe to an EES available to the AC corresponding to the EEC.

Step 1b: The ECS determines information about the EES available to the UE.

Optionally, the ECS may determine, based on at least one of information such as the AC profile, the location information of the UE, and edge computing service provider (edge computing service provider, ECSP) policy information, the information about the EES available to the UE.

Optionally, the EES that is available to the UE and that is determined by the ECS may include at least one EES, so that the information about the EES available to the UE may include an EES list (list), and the EES list may include an identifier of the at least one EES.

Optionally, information about each EES may specifically include at least one of the following information: identifier information of the EES, address information of the EES, endpoint information of the EES, EASID information of a service on the EES, a provider identifier of the EES, EDN information of the EES, a topology service range of the EES, a geographic service range of the EES, and a DNAI corresponding to the EES.

Step 1c: The ECS returns the information about the EES to the EEC.

Optionally, the ECS may further return the EDN information of the EES to the EEC.

The EEC discovers the EAS from the EES:
Step 2a: The EEC requests the EES to discover the EAS. In an implementation, the EEC may send an EAS discovery request (EAS discovery request) to the EES, to request the EES to discover the EAS.

Optionally, the EAS discovery request may include at least one of the following information: the UE identifier, an EEC identifier, an EAS discovery filter, or the location information of the UE. The EAS discovery filter may include information such as the AC profile and EAS feature information. The EAS feature information may further include at least one of the following information: the EASID, an EAS provider ID, an EAS type, a geographic service range of the EAS, or a topology service range of the EAS.

Step 2b: The EES determines the EAS.

The EES may determine, based on at least one of information about an edge application instance that is locally registered or locally gets online, the location information of the UE, and an EAS discovery filtering parameter provided by a user, an edge application instance that meets a user request. If a plurality of edge application instances meet the user request, the plurality of edge application instances may be returned.

Step 2c: The EES sends, to the EEC, information about the EAS discovered by the EES.

In an implementation, the EES may send an EAS discovery response (EAS discovery response) to the EEC, where the EAS discovery response includes the information about the EAS discovered by the EES.

Optionally, the information about the EAS may include at least one of the following: address information of the EAS, identification information of the EAS, or endpoint information of the EAS. The endpoint information of the EAS may include at least one of the following: an EAS uniform resource identifier (uniform resource identifier, URI), a fully qualified domain name (fully qualified domain name, FQDN), or an internet protocol (internet protocol, IP) address. In a possible implementation, the information about the EAS may be carried in an EAS profile (EAS profile).

Optionally, the EEC may provide the obtained information about the EAS for the application client, so that the application client is connected to the edge application instance.

In research of an SA6 edge application, a key problem is how to select a same EAS for a group of UEs. For example, for a game application, different users may form a queue to play a game, and a same application server is selected for a group of UEs, so that fairness of the game can be ensured, and synchronization signaling overheads between servers can be reduced.

In a possible case, a plurality of UEs included in one group are all located in a same EDN, or a plurality of UEs included in one group are all connected to an EES of one EDN. In this case, after selecting an EAS, one UE in the group may send, to at least one EES in the EDN, the EAS selected by the UE and information (a UE list included in the group, or a Group ID of the group) about the group. Therefore, when another UE in the group is connected to an EES in the EDN, an EAS selected by the UE may be learned of from the EES connected to the another UE, and the UE may further be connected to a same EAS.

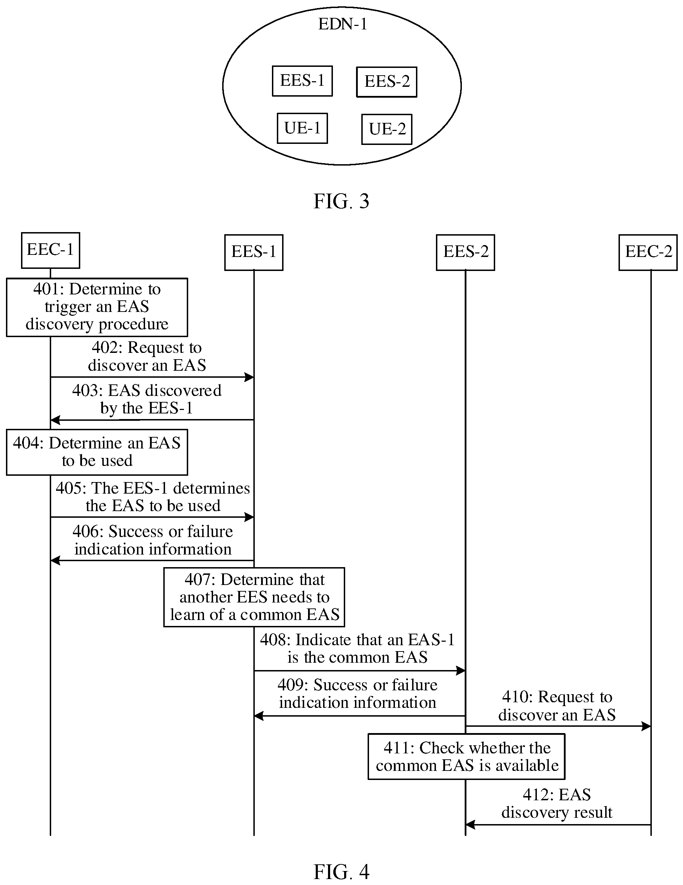

For example, as shown in FIG. 3, an EDN-1 may include UE-1, UE-2, an EES-1, and an EES-2. Using a scenario in FIG. 3 as an example, a method for selecting a same EAS by the UE-1 and the UE-2 may be shown in FIG. 4, and the procedure may include the following step 401 to step 412.

Step 401: An EEC-1 determines to trigger an EAS discovery procedure.

Optionally, the EEC-1 may trigger the EAS discovery procedure, or an AC-1 may trigger the EEC-1 to perform the EAS discovery procedure.

Optionally, the EEC-1 may be an edge enabler client in the UE-1, the AC-1 may be an application client in the UE-1, and an action performed by the EEC-1 or the AC-1 may be considered as being performed by the UE-1.

Step 402: The EEC-1 requests the EES-1 to discover an EAS.

In an implementation, the EEC-1 may send an EAS discovery request (EAS discovery request) to the EES-1, to request to discover the EAS.

Optionally, the EAS discovery request may include at least one of a UE ID, an AC profile (profile), or group (group) information. The UE ID is an identifier of the UE-1, the AC profile may be configuration information of the AC-1, and the group information is information about a group to which the UE-1 belongs.

Step 403: The EES-1 sends the EAS discovered by the EES-1 to the EEC-1.

In an implementation, the EES-1 may send an EAS discovery response (EAS discovery response) to the EEC-1, to carry information about the EAS discovered by the EES-1.

Optionally, the EAS discovery response may include information about at least one EAS, and the information about the at least one EAS is determined by the EES-1.

Step 404: The EEC-1 determines an EAS (which may be denoted as EAS-1) to be used.

The EEC-1 may determine the EAS to be used in the at least one EAS.

Step 405: The EEC-1 sends the EAS (namely, the EAS-1) that the EEC-1 determines to use to the EES-1.

Optionally, the EEC-1 may indicate, to the EES-1 via a selected EAS announcement request (selected EAS announcement request), the EAS that the EEC-1 determines to use.

Step 406: The EES-1 sends success or failure indication information to the EEC-1.

Step 407: The EES-1 determines that another EES needs to learn of a common EAS (common EAS).

The common EAS is an EAS to which a group of UEs can be connected. In embodiments of this application, the common EAS may also be referred to as a common used EAS, a shared EAS, or the like. This is uniformly described herein.

Step 408: The EES-1 indicates, to the EES-2, that the EAS-1 is the common EAS.

In an implementation, the EES-1 may indicate, to the EES-2, that the EAS-1 is the common EAS via an announce common EAS request (announce common EAS request) message.

Step 409: The EES-2 sends the success or failure indication information to the EES-1.

In an implementation, the success or failure indication information may be carried in an announce common EAS response (announce common EAS response).

Step 410: The EEC-2 requests the EES-2 to discover an EAS.

In an implementation, the EEC-2 may send an EAS discovery request to the EES-2, to request to discover the EAS.

Step 411: The EES-2 checks whether the common EAS is available.

Step 412: The EES-2 sends an EAS discovery result to the EEC-2.

In an implementation, the EEC-2 may send an EAS discovery response to the EES-2. The EAS discovery response may include information about the common EAS (namely, the EAS-1).

However, the solution corresponding to FIG. 4 is applicable only to a case in which a group of UEs belong to a same EDN, and is not applicable to a case in which a same group of UEs belong to different EDNs. In addition, broadcasting the information about the EAS inside the EDN by the EES causes a large amount of signaling waste, and further occupies communication resources. How to enable UEs in different EDNs to select a same EAS is a problem that has not been resolved currently.

In view of this, technical solutions of embodiments of this application are provided. The following describes the technical solutions in embodiments of this application with reference to the accompanying drawings in embodiments of this application. In the descriptions of this application, "/" indicates an "or" relationship between associated objects unless otherwise specified. For example, A/B may indicate A or B; and "and/or" in this application is merely an association relationship for describing associated objects and indicates that three relationships may exist. For example, A and/or B may indicate the following three cases: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, words such as "first" and "second" are used to distinguish between same items or similar items that have basically same functions and effects in embodiments of this application. A person skilled in the art may understand that the words such as "first" and "second" do not limit a quantity or an execution sequence, and the words such as "first" and "second" do not indicate a definite difference. In addition, in embodiments of this application, the word such as "example" or "for example" is used to represent giving an example, an illustration, or a description. Any embodiment or design scheme described as an "example" or with "for example" in embodiments of this application should not be explained as being more preferred or having more advantages than another embodiment or design scheme. Exactly, use of the word such as "example" or "for example" is intended to present a related concept in a specific manner for ease of understanding.

All the following embodiments may be implemented based on the edge application architecture shown in FIG. 1. Actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

In addition, because the EEC and the AC in the edge application network architecture are deployed in the UE, it may be considered that an EEC and an AC in same UE correspond to each other, the EEC and the AC that are deployed in the same UE may be considered as a same body, and the EEC or the AC and the UE to which the EEC or the AC belongs are also considered as a same body. This is uniformly described herein in this application.

In embodiments of this application, the EDN may have a deployment level relationship, for example, a province, a city, a district, a county, or a town. A low-level EDN may be in a high-level EDN. The EDN in embodiments of this application may be indicated by using parameters for representing a service range/service level, such as a topology service area (service area), a geographic service range, a DNAI, and a deployment level. This is uniformly described herein.

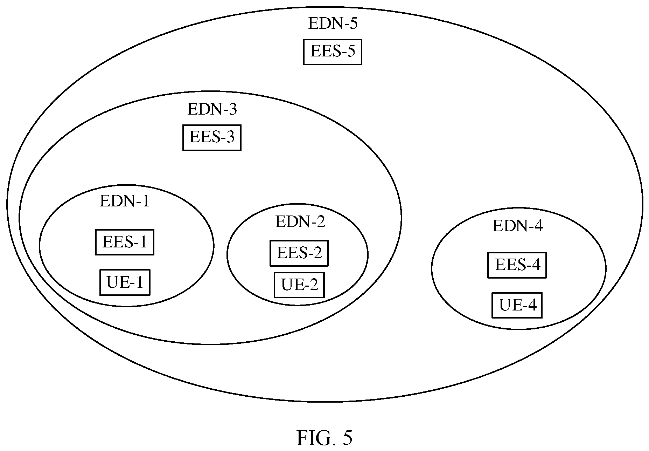

FIG. 5 is a schematic of a level relationship of EDNs. The EDNs may include an EDN-1, an EDN-2, an EDN-3, an EDN-4, and an EDN-5. The EDN-1 may include UE-1 and an EES-1, the EDN-2 may include UE-2 and an EES-2, and the EDN-1 and the EDN-2 are at a same level. Both the EDN-1 and the EDN-2 are in the EDN-3, the EDN-3 is at an upper level of the EDN-1 and the EDN-2, and the EDN-3 may further include an EES-3 and UE-3. The EDN-4 and the EDN-3 are at a same level, and the EDN-4 may include UE-4 and an EES-4. Both the EDN-3 and the EDN-4 are in the EDN-5, the EDN-5 is at an upper level of the EDN-3 and the EDN-4, and the EDN-5 may further include an EES-5 and UE-5. For example, the EDN-1 may be Haidian District, the EDN-2 may be Chaoyang District, the EDN-3 may be Beijing, the EDN-4 may be Tianjin, and the EDN-5 may be North China. Haidian District and Chaoyang District may be at a same level, and Beijing may be at an upper level of Haidian District and Chaoyang District. Beijing and Tianjin may be at a same level, and North China may be at an upper level of Beijing and Tianjin.

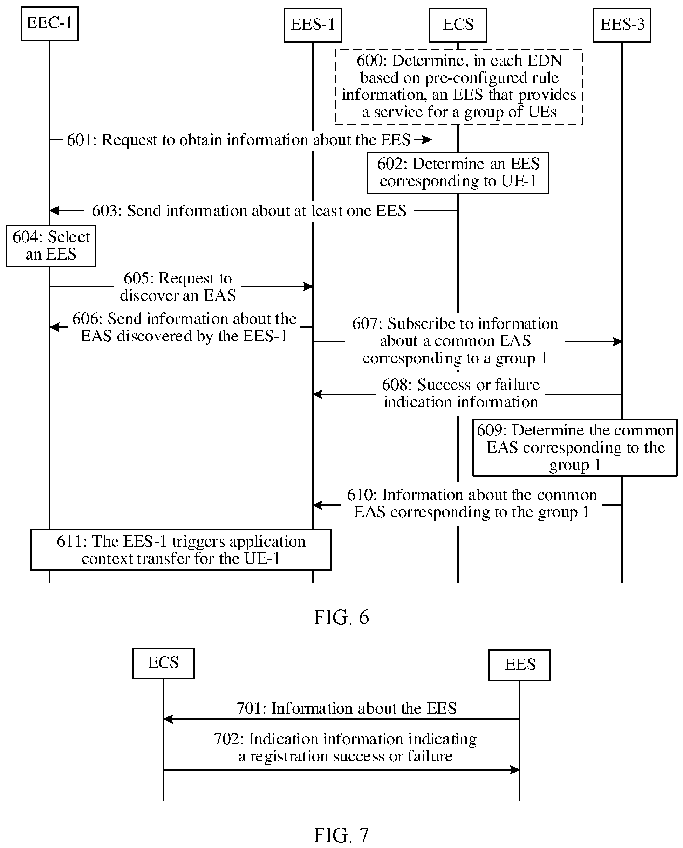

The network architecture in FIG. 5 is used as an example. A method for obtaining an edge computing service provided in this application may be shown in FIG. 6. The method may include the following steps.

Step 600: An ECS determines, in each EDN based on pre-configured rule information, an EES that provides a service for a group of UEs.

In a possible implementation, the ECS may determine a unique EES in EESs corresponding to each EDN, and the unique EES is used to provide an edge computing service for a group of UEs.

In another possible implementation, the ECS may determine, in EESs corresponding to each EDN, a plurality of EESs that can provide a service for a group of UEs. In this case, the plurality of EESs that can provide the service for a group of UEs may perform negotiation, to further determine a unique EES used for providing the edge computing service for a group of UEs.

After the unique EES that provides the service for a group of UEs is determined in each EDN, when at least one UE needs to be connected to an EES in the EDN, the at least one UE is connected to the unique EES. The unique EES used for providing the edge computing service for a group of UEs may also be referred to as a common EES in the EDN.

For example, FIG. 5 is used as an example. A common EES in the EDN-1 may be the EES-1, a common EES in the EDN-2 may be the EES-2, a common EES in the EDN-3 may be the EES-3, and a common EES in the EDN-4 may be the EES-4.

A prerequisite for performing step 600 is that: The EES has been registered to the ECS, or information about the EES is pre-configured in the ECS, or the ECS may obtain the information about the EES over a network management system.

For example, FIG. 7 is a schematic flowchart of a case in which an ECS obtains deployment information of an EES. The procedure may include step 701 and step 702.

Step 701: The EES sends the information about the EES to the ECS.

Optionally, information that is about any EES and that is sent by the EES to the ECS may include at least one of the following information: identification information of the EES, address information of the EES, endpoint information of the EES, EASID information of a service on the EES, a provider identifier of the EES, or the deployment information corresponding to the EES.

Optionally, the deployment information corresponding to the EES may include at least one of the following information: EDN information of the EES, a topology service range of the EES, a geographic service range of the EES, a DNAI corresponding to the EES, or a level to which the EES belongs.

Optionally, the EDN information of the EES may include at least one of an identifier of the EDN, a topology service range of the EDN, and connection information (for example, an access point name (access point name, APN), a data network name (data network name, DNN), or single network slice selection assistance information (single network slice selection assistance information, s-nssai)) of the EDN.

Optionally, the endpoint information of the EES may include at least one of the following: an EES uniform resource identifier (uniform resource identifier, URI), an EES fully qualified domain name (fully qualified domain name, FQDN), an EES internet protocol (internet protocol, IP) address, or the like.

In a possible implementation, the information about the EES may be carried in a registration request message. Certainly, another message may be used to carry the information about the EES. This is not limited in this application.

Step 702: The ECS sends indication information indicating a registration success or failure to the EES.

In a possible implementation, the indication information indicating the registration success or failure may be carried in an EES registration response message. Certainly, another message may be used to carry the indication information indicating the registration success or failure. This is not limited in this application.

It should be noted that step 600 is optional, and step 600 may not be performed.

Optionally, before step 600, the EEC may further indicate that the ECS needs to select a common EES for each EDN.

Step 601: An EEC-1 requests the information about the EES from the ECS.

In a possible implementation, the EEC-1 may send a service configuration request message to the ECS to request to obtain the information about the EES. Certainly, another message may be used to request to obtain the information about the EES. This is not limited in this application.

Optionally, the EEC-1 may further send location information of the UE-1 to the ECS, where the location information of the UE-1 may be used to enable the ECS to determine information about an EES corresponding to the UE-1.

Optionally, the EEC-1 may further send, to the ECS, EDN information or level information of the edge computing service expected by the EEC-1, where the EDN information or the level information of the edge computing service expected by the EEC-1 may further be used to enable the ECS to determine the information about the EES corresponding to the UE-1.

Optionally, the EEC-1 may further send information about an AC-1 to the ECS, where the information about the AC-1 is used to enable the ECS to determine information about an EES corresponding to the EEC-1. The information about the AC-1 may include at least one of the following information: an identifier (ACID) of the AC-1, a type of the AC-1, a service key performance indicator (key performance indicator, KPI) needed by the AC-1, identification information of an EAS needed by the AC-1, or a service KPI of the EAS needed by the AC-1. In a possible implementation, the information about the AC-1 may be included in an AC profile.

It should be understood that the EEC-1 is an edge enabler client in the UE-1, the AC-1 may be an application client in the UE-1, and the AC-1, the EEC-1, and the UE-1 may be considered as a same body. Therefore, the EDN information or the level information of the edge computing service expected by the EEC-1 may also be considered as EDN information or level information of the edge computing service expected by the UE-1, to enable the ECS to determine the information about the EES corresponding to the UE-1. In addition, the information about the AC-1 may also be considered as information about the UE-1, to enable the ECS to determine the information about the EES corresponding to the UE-1.

Optionally, the location information of the UE-1, the EDN information or the level information of the edge computing service expected by the EEC-1, and the information about the AC-1 may be used in any combination, to enable the ECS to determine the information about the EES corresponding to the UE-1; or may be used separately to enable the ECS to determine the information about the EES corresponding to the UE-1.

Optionally, the EEC-1 may further send information about a group 1 to the ECS. The group 1 is a UE group, the group 1 may include a group of UEs, and the UE-1 may be UE in the group 1. The information about the group 1 may include at least one of information such as a group identifier (group ID) and/or a UE list.

Optionally, the foregoing information may be carried in the service configuration request message and sent to the ECS.

Step 602: The ECS determines the EES corresponding to the UE-1.

The AC-1, the EEC-1, and the UE-1 are a same body. Therefore, the EES corresponding to the UE-1 is also the EES corresponding to the EEC-1 and the EES corresponding to the AC-1. This is uniformly described herein. The EES determined by the ECS is an EES that can provide the edge computing service for the AC-1.

First, the ECS may determine an EDN corresponding to the UE-1. Further, the ECS may determine the EES corresponding to the UE-1 in the EDN corresponding to the UE-1.

Optionally, a method for the ECS to determine the EDN and the EES corresponding to the UE-1 may specifically include at least one of the following methods:

Method 1: The ECS may randomly select at least one EES in at least one EDN as the EES corresponding to the UE-1.

Method 2: The ECS may determine, based on received location information of the UE-1, the EDN and the EES corresponding to the UE-1. In a possible implementation, the ECS may determine, as the EDN corresponding to the UE-1, at least one level of EDN in which the UE-1 is in or to which the UE-1 may be connected, and further determine the EES corresponding to the EEC-1 in the EDN corresponding to the UE-1. For example, using FIG. 5 as an example, the UE-1 is in the EDN-1, so that the EES-1 may be the EES corresponding to the UE-1. The UE-1 is also in the EDN-3, so that the EES-3 may also be the EES corresponding to the UE-1. The UE-1 is also in the EDN-5, so that the EES-5 may also be the EES corresponding to the UE-1.

Method 3: The ECS may further determine, based on the EDN information or the level information of the edge computing service expected by the EEC-1, the EDN corresponding to the UE-1 and the EES in the EDN. For example, EDNs that EEC-1 expects to use are the EDN-1 and the EDN-3, or levels of the edge computing service expected by the EEC-1 are two levels (namely, the EDN-1 and the EDN-3). Therefore, EDNs that are corresponding to the EEC-1 and that are determined by the ECS are the EDN-1 and the EDN-3, and corresponding EESs, for example, the EES-1 and the EES-3, are further determined in the EDN-1 and the EDN-3.

Optionally, when step 600 is performed, each EDN uses a unique EES. If an EDN is an EDN corresponding to the EEC-1, a corresponding EES determined by the ECS in the EDN is also a common EES in the EDN. In this case, only one corresponding EES is determined in each corresponding EDN. FIG. 5 of this application is described by using an example in which each EDN includes one EES.

Optionally, when step 600 is not performed, one EDN may include a plurality of EESs. If an EDN is an EDN corresponding to the EEC-1, there may be a plurality of corresponding EESs determined by the ECS in the EDN. Therefore, a quantity of corresponding EESs determined by the ECS may be greater than a quantity of determined corresponding EDNs.

It should be understood that the EES has been registered to the ECS, or the deployment information of the EES is preconfigured in the ECS, or the ECS may obtain the deployment information of the EES over the network management system. Therefore, after determining the EES corresponding to the EEC-1, the ECS may determine the information about the EES corresponding to the EEC-1.

Optionally, the information about the EES in this embodiment of this application may include at least one of the following information: the identification information of the EES, the address information of the EES, or the deployment information corresponding to the EES.

Optionally, the deployment information corresponding to the EES may include at least one of the following: the EDN information of the EES, the topology service range of the EES, the geographic service range of the EES, the DNAI corresponding to the EES, or the level to which the EES belongs.

Step 603: The ECS sends information about at least one EES to the EEC-1.

The information about the at least one EES is information about at least one EES corresponding to the UE-1 determined by the ECS. For the information about the at least one EES, refer to descriptions of the information about the EES in step 701. Details are not described herein again.

In a possible implementation, the information about the at least one EES may be carried in a service configuration response message. Certainly, another message may be used to carry the information about the EES. This is not limited in this application.

Step 604: The EEC-1 selects an EES.

The EEC-1 may select, from the at least one EES determined by the ECS, an EES to be used. In this embodiment of this application, the EES selected by the EEC-1 may be used to determine an EAS that provides the edge computing service for the AC-1. It may also be understood as that the EES selected by the EEC-1 is an EES corresponding to the EAS that the EEC-1 expects to use to provide the edge computing service for the AC-1.

Optionally, a specific manner in which the EEC-1 selects the EES is as follows.

In a possible implementation, the EEC-1 may select the EES based on the EDN information or the level information of the edge computing service expected by the EEC-1. For example, the EEC-1 may select an EES that is closest to the UE or at a lowest level as the EES to be used.

In a possible implementation, the EEC-1 may learn of a location of UE other than the UE-1 in the group 1, and may further select, based on a location relationship between the UE-1 and the another UE, the EES to be used. For example, the EEC-1 may select an EES with equal location distances from other UEs as the EES to be used.

Optionally, in this embodiment of this application, the EEC-1 may not mandatorily require UEs in a same group to be connected to a same EAS, that is, select a same EES. In a possible implementation, a distance between one UE and another UE in the same group is long, and being connected to the same EAS has poor effect. Therefore, the EEC-1 may determine that the UE is separately connected to the EAS, that is, select a separate EES.

For example, the EES-1, the EES-3, and the EES-5 are corresponding EESs determined by the ECS in step 602. It should be understood that the UE-1 is located in Haidian, the UE-4 is located in Tianjin, and the UE-1 and the UE-4 are not in a same urban area. The EEC-1 may determine that the UE-1 and the UE-4 do not need to be connected to a same EAS, and the EEC-1 does not need to select an EES (the EES-3) at a level of North China urban area. Therefore, the EEC-1 determines that the EES-1 and the EES-3 are EESs to be used.

The following steps are described by using an example in which the EESs selected by the EEC-1 are the EES-1 and the EES-3. This is uniformly described herein.

Step 605: The EEC-1 requests the EES-1 to discover an EAS.

In an implementation, the EEC-1 may request, via an EAS discovery request message, the EES-1 to discover the EAS. Certainly, another message may be used to request to discover the EAS. This is not limited in this application.

That the EEC-1 requests the EES-1 to discover the EAS may specifically include: The EEC-1 requests the EES-1 to discover the EAS that provides the edge computing service for the AC-1.

Optionally, when performing step 605, the EEC-1 may further send service information corresponding to the AC-1 to the EES-1, where the service information corresponding to the AC-1 may be used to determine the EAS that can provide the edge computing service for the AC-1. The service information that is corresponding to the AC-1 and that is sent by the EEC-1 to the EES-1 may be service information that is needed by the AC-1 or that the AC-1 requests to obtain.

In a possible implementation, the service information corresponding to the AC-1 may be carried in the EAS discovery request message or another message sent by the EEC-1 to the EES-1. This is not limited in this application.

In a possible implementation, the service information corresponding to the AC-1 may include at least one of the following: information such as an AC profile for matching an EAS parameter, an EAS feature needed by the AC, an identifier of the EAS, or an EAS provider identifier.

When the EEC-1 sends the service information corresponding to the AC-1 to the EES-1, the EES-1 may determine, based on the service information corresponding to the AC-1, the EAS that can provide the edge computing service for the AC-1 from EASs managed by the EES-1. The EAS that provides the edge computing service for the AC-1 may be denoted as an EAS-1.

That the EEC-1 requests the EES-1 to discover the EAS may further include: The EEC-1 requests the EES-1 to discover a common EAS corresponding to the group 1. The group 1 is a UE group, the group 1 may include a plurality of UEs, and the UE-1 may be the UE in the group 1. The common EAS corresponding to the group 1 is an EAS that can provide the edge computing service for the UE included in the group 1.

Optionally, when performing step 605, the EEC-1 may further send the information about the group 1 to the EES-1, where the information about the group 1 may indicate information about the UE included in the group 1. The information about the group 1 may include information such as the group ID and/or the UE list. The information about the group 1 may be used to enable the EES-1 to determine the common EAS for the UE included in the group 1.

Optionally, the information about the group 1 may be carried in the EAS discovery request message or another message. This is not limited in this application.

Optionally, after receiving the information about the group 1 sent by the EEC-1, the EES-1 may determine whether the common EAS corresponding to the group 1 is locally maintained. If the EES-1 locally maintains the common EAS corresponding to the group 1, the EES-1 may send the common EAS corresponding to the group 1 to the EEC-1. For example, UE other than the UE-1 in the group 1 has previously requested to discover and determined the common EAS corresponding to the group 1. Therefore, the EES-1 may learn of the common EAS corresponding to the group 1 before step 605. Further, after the EES-1 receives the information about the group 1 sent by the EEC-1, the EES-1 may send the previously learned-of common EAS corresponding to the group 1 to the EEC-1.

If the EES-1 does not locally maintain the common EAS corresponding to the group 1, the EES-1 needs to further determine the corresponding EAS for the group 1.

In this embodiment of this application, the common EAS corresponding to the group 1 may be determined in at least one EAS corresponding to at least one EES selected by the EEC-1. Therefore, when the EES-1 does not maintain the common EAS corresponding to the group 1, the EES-1 may further request another EES to obtain or subscribe to the common EAS corresponding to the group 1.

Optionally, when performing step 605, the EEC-1 may further send the information about the at least one EES to the EES-1. The information that is about the at least one EES and that is sent by the EEC-1 to the EES-1 is information about an EES other than the EES-1 in the at least one EES selected by the EEC-1. For example, the EES-1 and the EES-3 are to be used EESs determined by the EEC-1, but a candidate EES list in the EAS discovery request message sent by the EEC-1 to the EES-1 may include only information about the EES-3, and does not include information about the EES-1.

It should be understood that the information about the at least one EES may indicate the EES-1 to request the at least one EES to obtain or subscribe to the common EAS corresponding to the group 1. For example, the EEC-1 may send the information about the EES-3 to the EES-1, to indicate the EES-1 to subsequently request the EES-3 to obtain or subscribe to the common EAS corresponding to the group 1.

Step 606: The EES-1 sends information about the EAS discovered by the EES-1 to the EEC-1.

The information about the EAS discovered by the EES-1 is information about the EAS that can provide the edge computing service for the AC-1. The EAS discovered by the EES-1 is an EAS in the EDN-1, and the EAS discovered by the EES-1 corresponds to the EES-1 and the EDN-1.

Optionally, if the EES-1 discovers a plurality of EASs, the plurality of EASs may all be EASs in the EDN-1, and the plurality of EASs all correspond to the EES-1 and the EDN-1.

When the EAS discovered by the EES-1 includes a plurality of EASs, after step 606, the following step X, step Y, and step Z may be further included.

Step X: The EEC-1 selects an EAS determined to be used from the plurality of EASs discovered by the EES-1.

Step Y: The EEC-1 sends the EAS that the EEC-1 determines to use to the EES-1.

In a possible implementation, the EEC-1 may indicate, to the EES-1 via a selected EAS announcement request (selected EAS announcement request), the EAS that the EEC-1 determines to use.

Step Z: The EES-1 sends success or failure indication information to the EEC-1.

In an implementation, the success or failure indication information may be carried in the selected EAS announcement response (selected EAS announcement response).

Optionally, if the EEC-1 does not send the information about the at least one EES and/or the information about the group 1 to the EES-1 in step 605, the EEC-1 may send the information about the at least one EES and/or the information about the group 1 to the EES-1 in step Y.

After step 606 is performed, or after step 606, step X, step Y, and step Z are performed, the EEC-1 may determine a unique EAS that provides the edge computing service for the AC-1. Then, the EEC-1 may enable the AC-1 to be connected to the EAS. For example, it is assumed that the EAS selected by the EEC-1 to provide the edge computing service for the AC-1 is the EAS-1. In this case, the EEC-1 may transmit obtained information about the EAS-1 to the AC-1, so that the AC-1 is connected to the EAS-1.

Optionally, the information about the EAS discovered by the EES-1 may be carried in an EAS discovery response message and sent to the EEC-1. Certainly, there may be another carrying manner. This is not limited in this application.

Step 607: The EES-1 subscribes to the information about the common EAS corresponding to the group 1 from the EES-3.

In the foregoing step 605, the EEC-1 sends the information about the group 1 and the information about the EES-3 to the EES-1. Based on this, the EES-1 may request the EES-3 to obtain the common EAS corresponding to the group 1.

In a possible implementation, the EES-1 may request the EES-3 to obtain the information about the EAS by sending an announce common EAS subscription request (announce common EAS subscription request) message.

Optionally, when step 607 is performed, the EES-1 may further send the information about the group 1 to the EES-3, where the information about the group 1 indicates the EES-3 to determine the common EAS corresponding to the group 1. The information about the group 1 may be carried in the announce common EAS subscription request message or another message. This is not limited in this application.

Optionally, when step 607 is performed, the EES-1 may further send the service information corresponding to the AC-1 to the EES-3, where the service information corresponding to the AC-1 may be used to assist in determining the common EAS corresponding to the group 1, and the service information corresponding to the AC-1 may make the common EAS corresponding to the group 1 determined by the EES-3 more suitable for a service scenario of the AC-1. For the service information corresponding to the AC-1, refer to descriptions in step 605. Details are not described herein again.

Step 608: The EES-3 sends the success or failure indication information to the EES-1.

When subscription succeeds, the EES-3 may indicate a subscription ID to the EES-1. When subscription fails, the EES-3 may indicate a cause of the failure to the EES-1.

In a possible implementation, the success or failure indication information may be carried in an announce common EAS subscription response (announce common EAS subscription response) message.

In this embodiment of this application, UE other than the UE-1 in the group 1 may also perform the foregoing step 601 to step 608. For example, the group 1 may include the UE-1, the UE-2, and the UE-3, and an EEC-2 in the UE-2 and an EEC-3 in the UE-3 may also perform steps similar to the foregoing step 601 to step 608.

For example, the EEC-2 and the EES-2 may perform the following steps.

Step 601a: The EEC-2 requests information about an EES from the ECS. For this step, refer to descriptions in step 601.

Step 602a: The ECS determines an EES corresponding to the UE-2. For this step, refer to descriptions in step 602.

Step 603a: The ECS sends information about at least one EES to the EEC-2. For this step, refer to descriptions in step 603.

Step 604a: The EEC-2 selects an EES. For this step, refer to descriptions in step 604.

Optionally, the EES selected by the EEC-2 may be the same as the EES selected by the EEC-1.

Step 605a: The EEC-2 requests the EES-2 to discover an EAS. For this step, refer to the descriptions in step 605.

The EAS that the EEC-2 requests the EES-2 to discover is an EAS that can provide the edge computing service for an AC-2.

Step 606a: The EES-2 sends information about the EAS discovered by the EES-2 to the EEC-2. For this step, refer to descriptions in step 606.

The information about the EAS discovered by the EES-2 is information about the EAS that can provide the edge computing service for the AC-2. The EAS discovered by the EES-2 is an EAS in the EDN-2, and the EAS discovered by the EES-2 corresponds to the EES-2 and the EDN-2.

Step 607a: The EES-2 requests the EES-3 to subscribe to the common EAS corresponding to the group 1. For this step, refer to the descriptions in step 605.

Step 608a: The EES-3 sends the success or failure indication information to the EES-2.

After step 601a to step 608a, the EES-3 may receive the information about the group 1 and/or service information corresponding to the AC-2.

For another example, the EEC-3 and the EES-3 may perform the following steps.

Step 601b: The EEC-3 requests information about an EES from the ECS. For this step, refer to the descriptions in step 601.

Step 602b: The ECS determines an EES corresponding to the UE-3. For this step, refer to the descriptions in step 603.

Step 603b: The ECS sends information about at least one EES to the EEC-3. For this step, refer to the descriptions in step 603.

Step 604b: The EEC-3 selects an EES. For this step, refer to the descriptions in step 604.

Optionally, the EES selected by the EEC-3 may be the same as the EES selected by the EEC-1.

Step 605b: The EEC-3 requests the EES-3 to discover an EAS. For this step, refer to the descriptions in step 605.

The EAS that the EEC-3 requests the EES-3 to discover is an EAS that can provide the edge computing service for an AC-3.

Step 606b: The EES-3 sends information about the EAS discovered by the EES-3 to the EEC-3. For this step, refer to the descriptions in step 606.

The information about the EAS discovered by the EES-3 is information about the EAS that can provide the edge computing service for the AC-3. The EAS discovered by the EES-3 is an EAS in the EDN-3, and the EAS discovered by the EES-3 corresponds to the EES-3 and the EDN-3.

Optionally, in a scenario shown in FIG. 5, an EES at a highest level in EESs selected by the EEC-3 is the EES-3. In this case, the EEC-3 does not need to send information about another EES to the EES-3, and the EES-3 does not need to interact with the another EES. Therefore, the EES-3 may determine, from the EDN-3, the common EAS corresponding to the group 1.

After step 601b to step 606b, the EES-3 may receive the information about the group 1 and/or service information corresponding to the AC-3.

Step 609: The EES-3 determines the common EAS corresponding to group 1.

The EES-3 may determine, based on the previously obtained information about the group 1 and at least one of the service information corresponding to the AC-1, the AC-2, or the AC-3, the common EAS corresponding to the group 1.

In an implementation, after receiving the information about the group 1, the EES-3 may first determine whether the common EAS corresponding to the group 1 is locally maintained. If the common EAS corresponding to the group 1 is locally maintained, the common EAS corresponding to group 1 is directly fed back to EES-1. If the common EAS corresponding to the group 1 is not locally maintained, the EES-3 needs to further obtain the common EAS corresponding to group 1.

In a possible case, UE other than the UE-1 in the group 1 has previously requested to discover and determined a common EAS for the group 1. Then, the EES-3 may learn of the common EAS corresponding to the group 1 before step 605. Therefore, the EES-3 may send the previously learned-of common EAS corresponding to the group 1 to the EES-1.

In a possible case, the EES-3 does not locally maintain the common EAS corresponding to the group 1. In this case, the EES-3 needs to determine the common EAS corresponding to the group 1.

Optionally, the EES-3 may determine, as the common EAS of the UEs in the group 1, an EAS determined for an AC (for example, the AC-1) in the group 1.

For example, the EES-3 receives the service information corresponding to the AC-1 (corresponding to the UE-1) and the AC-2 (corresponding to the UE-2) in the group 1. The EES-3 may determine, based on the service information corresponding to the AC-1 and the AC-2, an EAS needed by services corresponding to the AC-1 and the AC-2 in at least one EAS corresponding to the EES-3, where the EAS may be considered as an EAS that can provide the edge computing service for the AC-1 and the AC-2, and the EAS may be used as the common EAS of the UEs included in the group 1. For example, the EAS shared by the group 1 may be an EAS-3.

For information about the EAS, refer to descriptions in step 2c. Details are not described herein again.

Based on this, when another UE in the group 1 subsequently requests the EES-3 to discover the EAS, the EES-3 may determine, based on the information about the group 1, to send the EAS-3 to the another UE in the group (directly or via another EES). Therefore, when obtaining the information about the EAS from the EES-3, the UEs in the group may obtain a same EAS, so that a plurality of different UEs (actually ACs in the UEs) may be connected to the same EAS.

Optionally, step 609 may be performed only when the EES-3 receives service information corresponding to the ACs in the plurality of UEs in the group 1. If the EES-3 receives only service information corresponding to an AC in one UE in the group 1 (for example, receives only the service information corresponding to the AC-1), step 609 may not be performed. In this case, only an EAS needs to be determined for the AC-1, and the common EAS does not need to be determined for the group 1.

Optionally, if the EES-3 has received, before receiving the service information corresponding to the AC-1, service information corresponding to an AC in another UE in the group 1 (for example, has received the service information of the AC-2 before), when receiving the service information corresponding to the AC-1, the EES-3 may determine the common EAS for the group 1.

Step 610: The EES-3 sends the information about the common EAS corresponding to the group 1 to the EES-1.

For example, it is assumed that the common EAS that is corresponding to the group 1 and that is determined by the EES-3 is the EAS-3. In this case, the EES-3 may send information about the EAS-3 to the EES-1.

Optionally, in step 610, the EES-3 may further send the information about the group 1 to the EES-1, where the information about the group 1 may be sent together with the information about the common EAS corresponding to the group 1, to indicate that the EAS-3 is the common EAS corresponding to the group 1.

In a possible implementation, the EES-3 may feed back the information about the EAS via an announce common EAS notification (announce common EAS notification) message.

Optionally, before step 609, the EES-3 may receive the information about the group 1 and/or information about the AC-2 from the EEC-2. In this case, the method may further include step 610a: The EES-3 sends the information about the common EAS corresponding to the group 1 to the EES-2. In this way, the EES-2 further indicates, to the EEC-2, the information about the common EAS corresponding to the group 1.

Optionally, before step 609, the EES-3 may receive the information about the group 1 and/or information about the AC-3 from the EEC-3. In this case, the method may further include step 610b: The EES-3 sends the information about the common EAS corresponding to the group 1 to the EEC-3.

Step 611: The EES-1 may trigger application context transfer for the EEC-1.

After step 606, the AC-1 may establish a connection to the EAS-1 fed back by the EES-1. However, after step 610, the EES-1 may obtain the EAS-3 delivered by the EES-3 for the AC-1. Based on this, the EES-1 may determine to switch the connection of the AC-1 to the EAS-3, so that the EES-1 may trigger the application context transfer for the AC-1.

After the application context transfer is completed, the AC-1 receives the information about the EAS, and the AC may be connected to a new EAS.

According to the foregoing method, the EEC-1 may determine a plurality of EESs that need to be used. The plurality of EESs may be in EDNs at different levels, and the plurality of EESs that need to be used may be used to determine the EAS that provides the edge computing service for the AC-1. The method has good flexibility. In addition, according to the foregoing method, when the EEC-1 receives an EAS at a high level, the EEC-1 may switch the connection of the AC-1 to an EAS corresponding to an EDN at a high level.

Optionally, in the embodiment corresponding to FIG. 6, step 608 and step 610 may be performed together. To be specific, the information about the common EAS corresponding to the group 1 may be sent together with the success or failure indication information. This can save signaling resources.

Optionally, when step 600 is not performed, one EDN may include a plurality of available EESs. When the EEC-1 requests a plurality of EESs in a same EDN to discover an EAS, the plurality of EESs may negotiate to determine a common EES. Further, the common EES may be used to discover an EAS for the EEC-1.

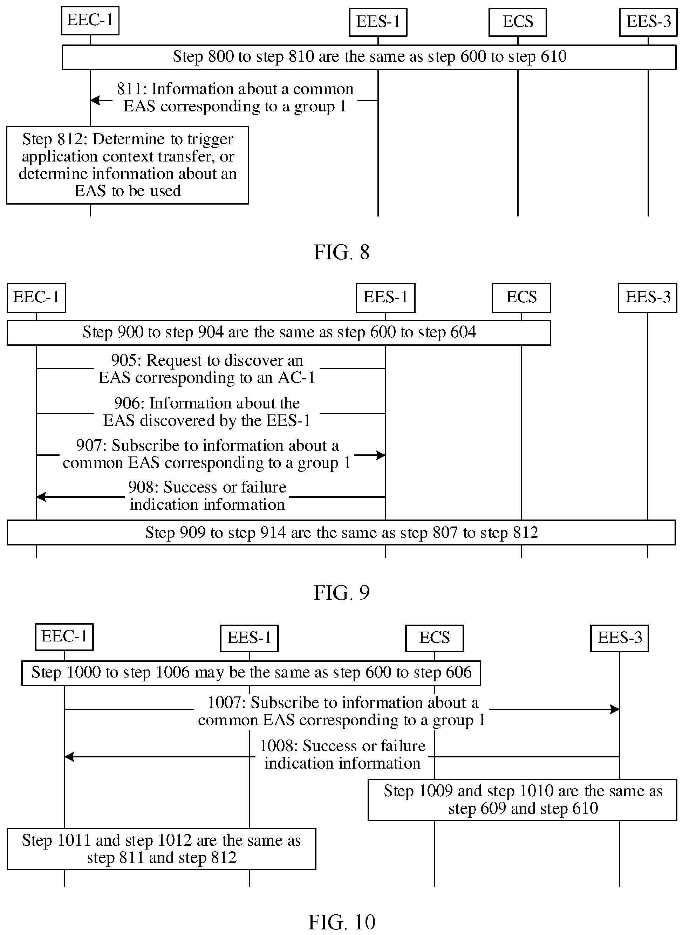

The network architecture in FIG. 5 is still used as an example. A method for obtaining an edge computing service provided in this application may be shown in FIG. 8. The method may include the following steps.

Step 800 to step 810 may be the same as step 600 to step 610. Differences lie in that: 1. In step 805, an EEC-1 may request the EES-1 to discover an EAS via an EAS discovery subscription request message. 2. In step 806, the EES-1 sends information about the EAS discovered by the EES-1 to the EEC-1 via an EAS discovery subscription response message. An advantage of using a message of a subscription type is that subsequently, the EES-1 may actively indicate information to the EEC-1 (for example, in subsequent step 811).

Step 811: The EES-1 sends information about a common EAS corresponding to a group 1 to the EEC-1.

In an implementation, the EES-1 may send the information about the EAS to the EEC-1 via a discovery notification (EAS discovery notification) message.

For example, information that is about an EAS discovered by the EES-3 and that is sent in step 811 is the information about the common EAS that is corresponding to the group 1 and that is determined by the EES-3, for example, information about an EAS-3.

Step 812: The EES-1 triggers application context transfer for an AC-1, or the EES-1 determines an EAS to be used.

Optionally, after step 806, the AC-1 may alternatively establish a connection to an EAS-1 fed back by the EES-1. After step 811, the EEC-1 may further receive the EAS-3 that can provide an edge computing service for the AC-1 and that is indicated by the EES-1. Based on this, the EEC-1 may determine to switch the connection of the AC-1 to the EAS-3, so that the EEC-1 may trigger the application context transfer for the AC-1.

Optionally, after step 806, after receiving the EAS-1 indicated by the EES-1, the EEC-1 may not indicate the AC-1 to be connected to the EAS-1, but enable the AC-1 to be in a waiting state. Subsequently, after step 811, the EEC-1 may further receive the EAS-3 that can provide the edge computing service for the AC-1 and that is indicated by the EES-1. In this case, the EEC-1 may further select one of the EAS-1 and the EAS-3 for use, to provide the edge computing service for the AC-1.

Optionally, before step 806, the EEC-1 may set a timer, and the EEC-1 may not be connected to the EAS within running time of the timer, so that the EEC-1 receives, within waiting time, information (for example, the information about the EAS-3) delivered subsequently. Therefore, the EEC-1 directly determines the EAS to be used from a plurality of EASs, thereby avoiding a handover procedure performed after the EEC-1 is connected to the EAS. This solution can reduce connection handover and the application context transfer to some extent, and further reduce a problem of signaling waste in a dynamic group scenario.

Certainly, if the EEC-1 does not receive information about another EAS within the running time of the timer, the EEC-1 may indicate the AC-1 to be connected to the EAS-1, and subsequently, the EES-1 or the EEC-1 may trigger the application context transfer of the AC-1.

That is, in the embodiment corresponding to FIG. 8, step 806 and step 811 may be performed together. To be specific, the information about the EAS-3 discovered by the EES-3 and information about the EAS-1 discovered by the EES-1 may be sent together to the EEC-1. In this implementation, signaling resources can be saved.

The method embodiment corresponding to FIG. 8 is similar to the method embodiment corresponding to FIG. 6. For other technical effects brought by the foregoing method embodiment corresponding to FIG. 8, refer to descriptions of technical effects of the foregoing method embodiment corresponding to FIG. 6.

The network architecture in FIG. 5 is still used as an example. A method for obtaining an edge computing service provided in this application may be shown in FIG. 9. The method may include the following steps.

Step 900 to step 904 may be the same as step 600 to step 604.

Step 905: An EEC-1 requests the EES-1 to discover an EAS.

In an implementation, the EEC-1 may request, via an EAS discovery request message, the EES-1 to discover the EAS. Certainly, another message may be used to request to discover the EAS. This is not limited in this application.

Optionally, when the EEC-1 requests the EES-1 to discover the EAS, the EEC-1 may further send service information corresponding to an AC-1 to the EES-1, where the service information corresponding to the AC-1 may be used to determine an EAS that can provide an edge computing service for the AC-1. For this action, refer to descriptions in step 605. Details are not described herein again.

Step 906: The EES-1 sends information about the EAS discovered by the EES-1 to the EEC-1.

For step 906, refer to descriptions in step 606. Details are not described herein again.

Step 907: The EEC-1 subscribes to information about a common EAS corresponding to a group 1 from the EES-1.

In a possible implementation, step 907 may be implemented via a common EAS information subscription request (common EAS information subscription request) message.

Step 908: The EES-1 sends success or failure indication information to the EEC-1.

In a possible implementation, step 908 may be implemented via a common EAS information subscription response (Common EAS information subscription response) message.

Step 909 to step 914 are the same as step 607 to step 612. Details are not described herein again.

In comparison with the method embodiments corresponding to FIG. 6 and FIG. 8, in the method embodiment corresponding to FIG. 9, the EEC-1 may not reuse a message (for example, an EAS discovery subscription request message) in an existing EAS discovery procedure, but use a new message (for example, the common EAS information subscription request message) to indicate, to the EES-1, information about the group 1 and the service information corresponding to the AC-1. This solution provides still another implementation of the method for obtaining the edge computing service, and improves flexibility of the method in this application.

The network architecture in FIG. 5 is still used as an example. A method for obtaining an edge computing service provided in this application may be shown in FIG. 10. The method may include the following step 1000 to step 1011.

Step 1000 to step 1006 may be the same as step 600 to step 606.

In step 1004, in information about an EES determined by an EEC-1, the EES-3 is at a highest level. Step 1005 and step 1006 may be an EAS discovery procedure in a conventional technology. For step 1005 and step 1006, refer to descriptions in step 402 and step 403.

Step 1007: The EEC-1 subscribes to information about a common EAS corresponding to a group 1 from the EES-3.

In a possible implementation, step 1007 may be implemented via a common EAS information subscription request (Common EAS information subscription request) message.

Optionally, in the method embodiment corresponding to FIG. 10, the EEC-1 determines that an EES to be used may be only the EES-3, so that the EEC-1 may directly request the EES-3 to discover the EAS.

Optionally, when performing step 1007, the EEC-1 may send, to the EES-3, at least one of information about the group 1 and service information corresponding to an AC-1. For content of the foregoing information, refer to descriptions in the method embodiment corresponding to FIG. 6. Details are not described herein again.

Step 1008: The EES-3 sends success or failure indication information to the EEC-1.

When subscription succeeds, the EES-3 may indicate a subscription ID to the EES-1. When subscription fails, the EES-3 may indicate a cause of the failure to the EES-1.

In a possible implementation, the success or failure indication information may be carried in an announce common EAS subscription response message.

Step 1009 and step 1010 are the same as step 609 and step 610, and step 1011 and step 1012 are the same as step 811 and step 812. Details are not described herein again.

In the method embodiment corresponding to FIG. 10, the EEC-1 may directly send a request message to an EES at a highest level in at least one EES to be used, to obtain information about an EAS. In this method, level-by-level interaction between EESs at different levels is not needed, simplifying complexity of implementing the solution, and reducing a workload of the EES.

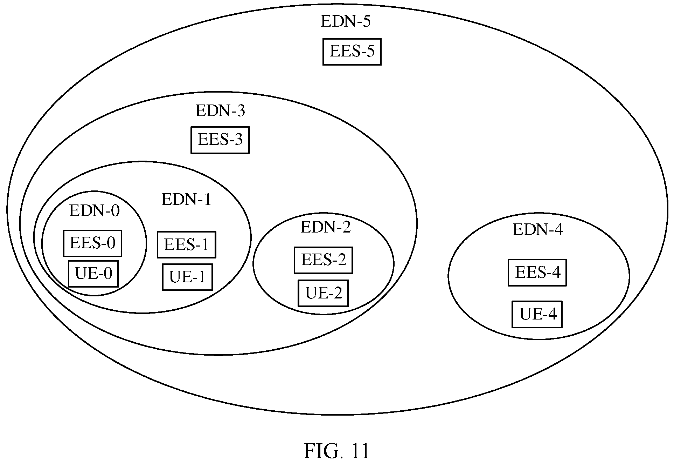

FIG. 11 is a schematic of another level relationship of EDNs. For FIG. 11, refer to related descriptions of the EDNs in FIG. 5. A difference between FIG. 11 and FIG. 5 lies in that the EDN-1 further includes an EDN-0, where the EDN-0 is at a lower level of the EDN-1, and the EDN-0 may include UE-0 and an EES-0. For example, the EDN-0 may be a "Shangdi" street, and the "Shangdi" street is a street in Haidian District, and belongs to a lower level of Haidian District.

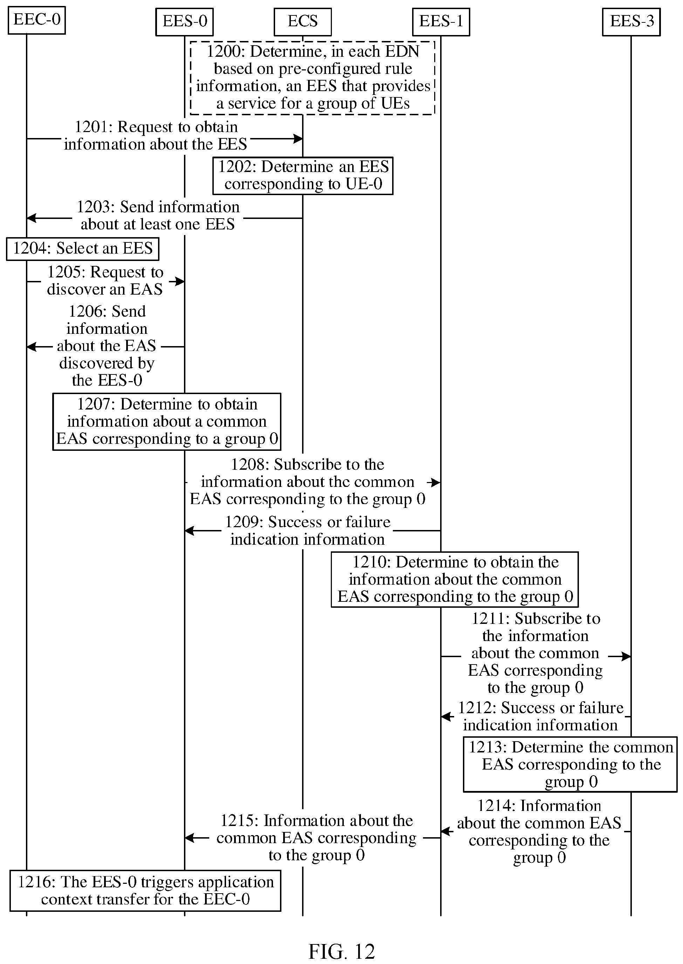

The network architecture in FIG. 11 is used as an example. A method for obtaining an edge computing service provided in this application may be shown in FIG. 12. The method may include the following step 1200 to step 1216.

Step 1200: An ECS determines, in each EDN based on pre-configured rule information, an EES that provides a service for a group of UEs. Step 1200 is the same as step 600. Details are not described herein again.

Step 1201: An EEC-0 requests information about the EES from the ECS.

In a possible implementation, the EEC-0 may send a service configuration request message to the ECS to request to obtain the information about the EES. Certainly, another message may be used to request to obtain the information about the EES. This is not limited in this application.

For this step, refer to related descriptions in step 601, provided that the EEC-1 is replaced with the EEC-0, the EES-1 is replaced with the EES-0, and the AC-1 is replaced with an AC-0. Details are not described herein again.

Step 1202: The ECS determines an EES corresponding to the UE-0.

For this step, refer to related descriptions in step 602, provided that the EEC-1 is replaced with the EEC-0, the EES-1 is replaced with the EES-0, and the AC-1 is replaced with the AC-0. Details are not described herein again.

Step 1203: The ECS sends information about at least one EES to the EEC-0.

In a possible implementation, the information about the at least one EES may be carried in a service configuration response message. Certainly, another message may be used to carry the information about the EES. This is not limited in this application.

For this step, refer to related descriptions in step 603, provided that the EEC-1 is replaced with the EEC-0, the EES-1 is replaced with the EES-0, and the AC-1 is replaced with the AC-0. Details are not described herein again.

Step 1204: The EEC-0 selects an EES.

For this step, refer to related descriptions in step 604, provided that the EEC-1 is replaced with the EEC-0, the EES-1 is replaced with the EES-0, and the AC-1 is replaced with the AC-0. Details are not described herein again.

In this embodiment, an EES that is to be used and that is determined by the EEC-0 may include information about the EES-0, the EES-1, and the EES-3.

Step 1205: The EEC-0 requests the EES-0 to discover an EAS.

In an implementation, the EEC-0 may request, via an EAS discovery request message, the EES-0 to discover the EAS. Certainly, another message may be used to request to discover the EAS. This is not limited in this application.

For this step, refer to related descriptions in step 605, provided that the EEC-1 is replaced with the EEC-0, the EES-1 is replaced with the EES-0, and the AC-1 is replaced with the AC-0. Details are not described herein again.

In this embodiment, the information that is about the at least one EES and that is sent by the EEC-0 to the EES-0 may include the information about the EES-1 and the EES-3, and does not need to include the information about the EES-0.

Step 1206: The EES-0 sends information about the EAS discovered by the EES-0 to the EEC-0.

Optionally, the information about the EAS discovered by the EES-0 may be carried in an EAS discovery response message and sent to the EEC-0. Certainly, there may be another carrying manner. This is not limited in this application.

For this step, refer to related descriptions in step 606, provided that the EEC-1 is replaced with the EEC-0, the EES-1 is replaced with the EES-0, and the AC-1 is replaced with the AC-0. Details are not described herein again.

Step 1207: The EES-0 determines to obtain information about a common EAS corresponding to a group 0.

In step 1205, the EES-0 may receive the information that is about the group 0 and that is sent by the EEC-0, where the group 0 is a group to which the UE-0 belongs. Based on this, the EES-0 may determine the corresponding common EAS for the group 0. If the EES-0 locally maintains the common EAS corresponding to the group 0, the EES-0 may directly feed back the common EAS corresponding to the group 0 to the EEC-0. If the EES-0 does not locally maintain the common EAS corresponding to the group 0, the EES-0 needs to further obtain the common EAS corresponding to the group 0 in another manner.

In step 1205, the EEC-0 may send the information about the EES-1 and the EES-3 to the EES-0. Based on this, the EES-0 may determine to request the EES-1 or the EES-3 to obtain the common EAS corresponding to the group 0. In an implementation, the EES-0 may determine, based on a level relationship between the EES-1 and the EES-3, to request the EES-1 (at a level lower than the EES-3) to obtain the information about the common EAS corresponding to the group 0.

Step 1208: The EES-0 subscribes to the information about the common EAS corresponding to the group 0 from the EES-1.

In a possible implementation, the EES-0 may subscribe to the information about the EAS from the EES-1 via an announce common EAS subscription request message.

For this step, refer to related descriptions in step 607, provided that the EEC-1 is replaced with the EEC-0, the EES-1 is replaced with the EES-0, the EES-3 is replaced with the EES-1, and the AC-1 is replaced with the AC-0. Details are not described herein again.

Optionally, when performing step 1208, the EES-0 may send the information about the EES-3 to the EES-1, and does not need to send the information about the EES-1.

Step 1209: The EES-1 sends success or failure indication information to the EES-0.

When subscription succeeds, the EES-3 may indicate a subscription ID to the EES-1. When subscription fails, the EES-3 may indicate a cause of the failure to the EES-1.

In a possible implementation, the success or failure indication information may be carried in an announce common EAS subscription response (announce common EAS subscription response) message.

For this step, refer to related descriptions in step 608, provided that the EEC-1 is replaced with the EEC-0, the EES-1 is replaced with the EES-0, the EES-3 is replaced with the EES-1, and the AC-1 is replaced with the AC-0. Details are not described herein again.

Optionally, the EES-0 may determine, based on service information corresponding to the AC-0 in the received announce common EAS subscription request message, an EAS-1 that can provide the edge computing service for the AC-0, where the EAS-1 is associated with the EES-1. Therefore, the announce common EAS subscription response message sent by the EES-0 to the EEC-0 may include information about the EAS-1.

Step 1210: The EES-1 determines to obtain the information about the common EAS corresponding to the group 0.

Optionally, the EAS discovery request message sent by the EES-0 to the EES-1 may include the information about the group 0, and the EES-1 needs to determine the corresponding common EAS for the group 0. If the EES-1 locally maintains the common EAS corresponding to the group 0, the EES-1 may feed back the common EAS corresponding to group 0 to the EEC-0. If the EES-1 does not locally maintain the common EAS corresponding to the group 0, the EES-1 needs to further obtain the common EAS corresponding to the group 0 in another manner.

Optionally, because the EAS discovery request message sent by the EES-0 to the EES-1 includes the information about the EES-3, the EES-1 may request the EES-3 to obtain the common EAS corresponding to the group 0.

Step 1211: The EES-1 subscribes to the information about the common EAS corresponding to the group 0 from the EES-3.

Step 1212: The EES-3 sends the success or failure indication information to the EES-1.

Step 1213: The EES-3 determines the common EAS corresponding to group 0.

Step 1214: The EES-3 sends the information about the common EAS corresponding to the group 0 to the EES-1.

Step 1211 to step 1214 are similar to step 607 to step 610. For details, refer to descriptions in step 607 to step 610. Details are not described herein again.

Optionally, step 1212 and step 1214 may be performed together. To be specific, the information about the common EAS corresponding to the group 0 may be sent together with the success or failure indication information. This can save signaling resources.

Step 1215: The EES-1 sends the information about the common EAS corresponding to the group 0 to the EES-0.

In a possible implementation, information about the EAS discovered by the EES-3 may be carried in an announce common EAS notification message for sending. Correspondingly, the EES-0 receives the announce common EAS notification message.

Step 1216: The EES-0 triggers application context transfer for the EEC-0.

This step is similar to the foregoing step 611. Refer to descriptions that the EES-1 triggers the application context transfer of the EEC-1 in the embodiment corresponding to FIG. 6. Details are not described herein again.

In comparison with the embodiment corresponding to FIG. 6, FIG. 8, FIG. 9, or FIG. 10, the embodiment corresponding to FIG. 12 has one more level, and therefore has an interaction procedure of one more level of EES. For another interaction process and message content, refer to the foregoing descriptions in the embodiment corresponding to FIG. 6, FIG. 8, FIG. 9, or FIG. 10. The solution shown in FIG. 12 is a process of level-by-level interaction from an EES (the EES-0) at a low level to an EES (the EES-3) at a high level to obtain information about an EAS.

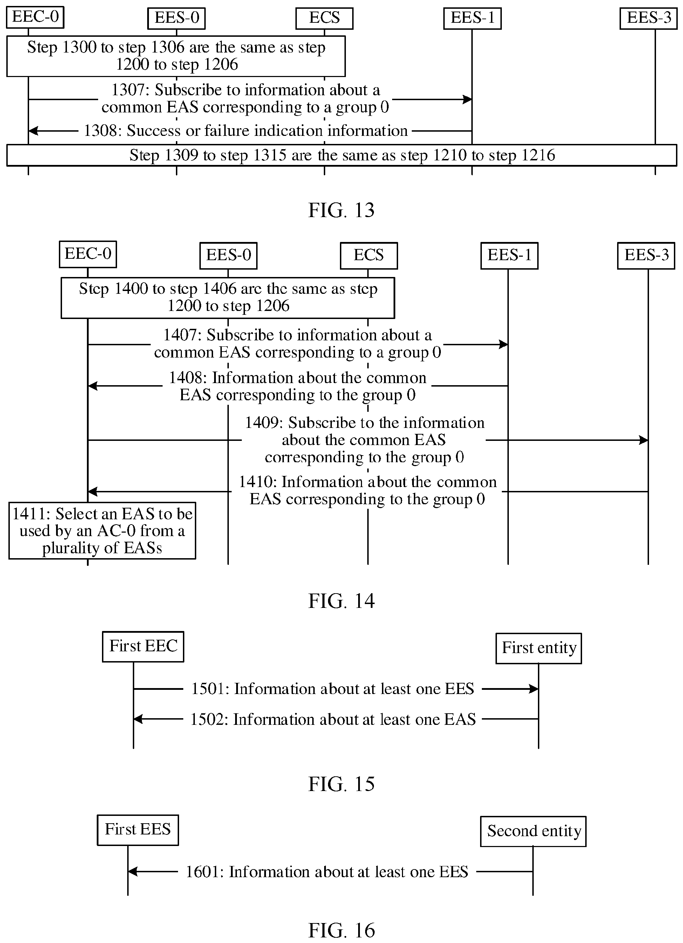

The network architecture in FIG. 11 is still used as an example below. A method for obtaining an edge computing service provided in this application may be shown in FIG. 13. The method may include the following step 1300 to step 1315.

Step 1300 to step 1306 are the same as step 1200 to step 1206. Refer to the foregoing descriptions.

Step 1307: An EEC-0 subscribes to information about a common EAS corresponding to a group 0 from the EES-1.

In a possible implementation, the EEC-0 may subscribe to, from the EES-1 via a common EAS subscription request message, the information about the common EAS corresponding to the group 0.

In step 1307, the EEC-0 may send information about the group 0 to the EES-1, to request the EES-1 to discover the common EAS corresponding to the group 0.

Optionally, the EEC-0 may further send service information corresponding to an AC-0 to the EES-1, where the service information corresponding to the AC-0 may further be used to determine the common EAS corresponding to the group 0.

It should be understood that for content of the foregoing information, refer to descriptions in the method embodiment corresponding to FIG. 6. For the UE-0, refer to related descriptions of the UE-1. For the AC-0, refer to related descriptions of the AC-1. For the group 0, refer to related descriptions of the group 1. Details are not described herein again.

Step 1308: The EES-1 sends success or failure indication information to the EEC-0.

Optionally, if a failure occurs, the indication information may further indicate a cause for the failure.

In a possible implementation, the success or failure indication information may be carried in a common EAS subscription response message.

Step 1309 to step 1315 are the same as step 1210 to step 1216. Refer to the foregoing descriptions.

In comparison with the embodiment corresponding to FIG. 12, the embodiment corresponding to FIG. 13 has the following differences: In the embodiment corresponding to FIG. 12, the EEC-0 first subscribes to the information about the common EAS corresponding to the group 0 from the EES-0, and then the EES-0 subscribes to the information about the common EAS corresponding to the group 0 level by level upward. However, in the embodiment corresponding to FIG. 13, the EEC-0 directly subscribes to the information about the common EAS corresponding to the group 0 from the EES-1, and then the EES-1 subscribes to the information about the common EAS corresponding to the group 0 level by level upward. This solution is a possible implementation.

The network architecture in FIG. 11 is still used as an example below. A method for obtaining an edge computing service provided in this application may be shown in FIG. 14. The method may include the following step 1400 to step 1411.

Step 1400 to step 1406 are the same as step 1200 to step 1206. Refer to the foregoing descriptions.

Step 1407: An EEC-0 subscribes to information about a common EAS corresponding to a group 0 from the EES-1.

In a possible implementation, the EEC-0 may request the EES-1 to discover an EAS by sending a common EAS subscription request message.

Optionally, the common EAS subscription request message sent by the EEC-0 to the EES-1 may not include information about an EES.

Optionally, the common EAS subscription request message sent by the EEC-0 to the EES-1 may include information about the group 0 and/or service information corresponding to an AC-0. The EEC-0 requests the EES-1 to discover that the EAS is the common EAS corresponding to the group 0.

It should be understood that, for the information about the group 0, refer to the foregoing related descriptions of the information about the group 1, and for the service information corresponding to the AC-0, refer to the foregoing related descriptions of the service information corresponding to the AC-1. Details are not described herein again.

Step 1408: The EES-1 sends the information about the common EAS corresponding to the group 0 to the EEC-0.

In a possible implementation, information about the EAS discovered by the EES-1 is carried in a common EAS subscription response message.

Step 1409: The EEC-0 subscribes to the information about the common EAS corresponding to the group 0 from the EES-3.

In a possible implementation, the EEC-0 may request the EES-3 to discover an EAS by sending the common EAS subscription request message.

Step 1409 is similar to step 1407 (provided that the EES-3 needs to be replaced with the EES-1). Refer to the foregoing descriptions. Details are not described herein again.

Step 1410: The EES-3 sends the information about the common EAS corresponding to the group 0 to the EEC-0.

In a possible implementation, information about an EAS discovered by the EES-3 is carried in the common EAS subscription response message.

Step 1411: The EEC-0 selects, from the EAS determined by the EES-3 and the EAS determined by the EES-1, an EAS to be used by the AC-0.

Optionally, the EEC-0 may select an EAS corresponding to an EES at a highest level.

It should be noted that, in the method embodiment corresponding to FIG. 14, EESs that need to be used and that are determined by the EEC-0 may be the EES-1 and the EES-3. In addition, the EEC-0 may directly send the common EAS subscription request message to the EES-1 and the EES-3, and level-by-level forwarding does not need to be performed by another EES.

Optionally, if both the EES-1 and the EES-3 feed back the information about the EAS, the EEC-0 may perform selection from a plurality of EASs. This manner of directly interacting with an EES to be used is efficient.

It should be noted that embodiments shown in FIG. 6, FIG. 8, FIG. 9, FIG. 10, FIG. 12, FIG. 13, and FIG. 14 are several example descriptions of the method for obtaining an edge computing service according to this application.

Based on the foregoing example descriptions of various scenarios, this application provides a method for obtaining an edge computing service, as shown in FIG. 15. The method may be applied to a first EEC, and the method may include the following steps.

Step 1501: The first EEC sends information about at least one EES to a first entity.

Optionally, the first EEC may be an edge enabler client in first UE, and the first EEC is located in the first UE. For example, FIG. 5 is used as an example. The first UE may be the UE-1, and the first EEC may be an EEC deployed in the UE-1. Alternatively, FIG. 11 is used as an example. The first UE may be the UE-0, and the first EEC may be an EEC deployed in the UE-0.

Optionally, the first entity may be a first EES, and the first EES can provide an edge computing service for the first EEC.

FIG. 6, FIG. 8, or FIG. 9 is used as an example. The first EEC may be the EEC-1, and the first EES may be the EES-1. FIG. 12 is used as an example. The first EEC may be the EEC-0, and the first EES may be the EES-0. FIG. 13 is used as an example. The first EEC may be the EEC-0, and the first EES may be the EES-1.

The at least one EES sent by the first EEC to the first entity can provide the edge computing service for the first EEC. FIG. 6, FIG. 8, or FIG. 9 is used as an example. The first EEC may be the EEC-1, the first EES may be the EES-1, and the at least one EES may include the EES-3. FIG. 12 is used as an example. The first EEC may be the EEC-0, the first EES may be the EES-0, and the at least one EES may include the EES-1 and the EES-3. FIG. 13 is used as an example. The first EEC may be the EEC-0, the first EES may be the EES-1, and the at least one EES may include the EES-3.

Optionally, information about any EES in the information about the at least one EES may include at least one of the following information: identification information of the EES, address information of the EES, or deployment information corresponding to the EES. The deployment information corresponding to the EES includes at least one of the following: EDN information of the EES, a topology service range of the EES, a geographic service range of the EES, a DNAI corresponding to the EES, or a level to which the EES belongs.

A type of a message that carries the information about the at least one EES is not limited in this embodiment of this application. Optionally, the information about the at least one EES may be carried in a message such as a discovery request message, a discovery subscription request message, or a common EAS information subscription request message.

For example, in the embodiment corresponding to FIG. 6, the first EEC may be the EEC-1, the first EES may be the EES-1, and step 1501 may be performed in step 605. For another example, in the embodiment corresponding to FIG. 8, the first EEC may be the EEC-1, the first EES may be the EES-1, and step 1501 may be performed in step 805. For another example, in the embodiment corresponding to FIG. 9, the first EEC may be the EEC-1, the first EES may be the EES-1, and step 1501 may be performed in step 907. For another example, in the embodiment corresponding to FIG. 12, the first EEC may be the EEC-0, the first EES may be the EES-0, and step 1501 may be performed in step 1205. For another example, in the embodiment corresponding to FIG. 13, the first EEC may be the EEC-0, the first EES may be the EES-1, and step 1501 may be implemented by using step 1307.

Step 1502: The first EEC receives information about at least one EAS from the first entity.

The at least one EAS can provide the edge computing service for a first AC. Optionally, the first AC corresponds to the first EEC, and the first AC and the first EEC may be deployed in same UE. In a possible implementation, the first EEC is an edge enabler client deployed in the first UE, the first AC is an application client deployed in the first UE, and the first EEC, the first AC, and the first UE may be considered as a same body.

Optionally, the at least one EAS corresponds to the first entity (namely, the first EES) and/or the at least one EES described above.

The embodiment corresponding to FIG. 6, FIG. 8, or FIG. 9 is used as an example. The first EEC may be the EEC-1, the first EES may be the EES-1, the at least one EES may be the EES-3, and the at least one EAS received by the EEC-1 may include the EAS-1 and the EAS-3. The EAS-1 corresponds to the EES-1, and the EAS-3 corresponds to the EES-3. In the embodiment corresponding to FIG. 6, step 1502 may be performed in step 606 and step 611. In the embodiment corresponding to FIG. 8, step 1502 may be performed in step 806 and step 811. In the embodiment corresponding to FIG. 9, step 1502 may be performed in step 908 and step 913.

The embodiment corresponding to FIG. 12 is used as an example. The first EEC may be the EEC-0, the first EES may be the EES-0, the at least one EES may include the EES-1 and the EES-3, and the at least one EAS received by the EEC-0 may include the EAS-0, the EAS-1, and the EAS-3. The EAS-0 corresponds to the EES-0, the EAS-1 corresponds to the EES-1, and the EAS-3 corresponds to the EES-3. In the embodiment corresponding to FIG. 12, step 1502 may be performed in step 1206 and step 1216.

FIG. 13 is used as an example. The first EEC may be the EEC-0, the first EES may be the EES-1, the at least one EES may include the EES-3, and the at least one EAS received by the EEC-0 may include the EAS-1 and the EAS-3. The EAS-1 corresponds to the EES-1, and the EAS-3 corresponds to the EES-3. In the embodiment corresponding to FIG. 13, step 1502 may be implemented by using step 1308 and step 1315.

Optionally, the first EEC is the EEC-1, and the first EES may be the EES-1. For content of the information about the at least one EAS, refer to descriptions in step 610. Details are not described herein again.

For the solution corresponding to FIG. 15, there are the following two possible implementations.

In a first implementation, that the first EEC receives the information about the at least one EAS may specifically include: The first EEC receives the information about the at least one EAS and information about a first group corresponding to a first EAS in the at least one EAS. The first EAS is used to provide the edge computing service for UE included in the first group. That is, the first EAS is a common EAS corresponding to the first group. Based on the first implementation, the common EAS corresponding to the first group may be indicated by the first EES, and the first EEC may obtain the common EAS corresponding to the first group after performing step 1502.

For example, the embodiment corresponding to FIG. 6 is used as an example. The first UE may be the UE-1, the first EEC may be the EEC-1, the first EES may be the EES-1, and the first group may be the group 1. The information that is about the at least one EAS and that is received by the EEC-1 may include the information about the EAS-1 and the EAS-3. The EAS-3 is the EAS used by the group 1, and the EAS-3 is the first EAS. When the EES-1 sends the information about the EAS-3 to the EEC-1, the information about the group 1 may be sent together, to indicate that the EAS-3 is the common EAS corresponding to the group 1. For details, refer to descriptions in the embodiment corresponding to FIG. 6. Details are not described herein again.

Based on the first implementation, before step 1502, the method may further include the following steps.

Step 1503: The first EEC sends first service information to the first EES, where the first service information is used to determine the at least one EAS.

The first service information is service information corresponding to the first AC, and the first AC is an AC corresponding to the first EEC.

Step 1504: The first EEC sends the information about the first group to the first EES.

For example, the first UE is the UE-1, the first EEC is the EEC-1, and the first EES is the EES-1. For step 1503 and step 1504, refer to related descriptions in step 605. Details are not described herein again.

In a second implementation, the information that is about the at least one EAS and that is received by the first EEC does not include the first EAS associated with the information about the first group. In other words, in the second implementation, information about the common EAS corresponding to the first group is not indicated by the first EES.

In the second implementation, before step 1502, the method may further include step 1505: The first EEC sends the first service information to the first EES, where the first service information is used to determine the at least one EAS. Step 1505 is same as step 1503. Details are not described herein again.

After step 1502, the method may further include step 1506: The first EEC determines the first EAS in the at least one EES as an EAS that is configured to provide the edge computing service for the UE included in the first group. In other words, an EAS used by the first group is determined by the first EEC.

Step 1507: The first EEC sends the information about the first group and information about the first EAS to the first EES. Step 1507 is performed to indicate, to the first EES, that the common EAS corresponding to the first group is the first EAS.

In the second implementation, after receiving at least one EAS that can provide the edge computing service for the first AC, the first EEC may determine, in the at least one EAS that can provide the edge computing service for the first AC, the common EAS (namely, the first EAS) corresponding to the first group, and then notify another EES of the determined first EAS.

It should be understood that, for example, the first UE is the UE-1, the first EEC is the EEC-1, the first EES is the EES-1, and the first group is the group 1. Refer to FIG. 6. If the first EEC performs the solution in the second implementation, step 605 and step 607 do not include the information about the group 1.

Optionally, the first EAS may correspond to the first EES, and the information about the first EAS may be determined by the first EES. For example, FIG. 5 is used as an example. The first EEC may be the EEC-3 in the UE-3, the first EES may be the EES-3, and the common EAS corresponding to the first group may be the EAS-3 corresponding to the EES-3.

Optionally, the first EAS may alternatively correspond to a second EES in the at least one EES, and the second EES can provide the edge computing service for the UE included in the first group. The information about the first EAS may be received by the first EES from the second EES. For example, FIG. 5 is used as an example. The first EES may be the EES-1, the second EES may be the EES-3, the common EAS corresponding to the first group may be the EAS-3, and the EAS-3 may be sent by the EES-3 to the EES-1. Alternatively, the information about the first EAS is received by the first EES from the second EES via a third EES, where the third EES is configured to relay communication between the first EES and the second EES. For example, FIG. 11 is used as an example. The first EES may be the EES-0, the second EES may be the EES-3, the third EES may be the EES-1, the common EAS corresponding to the first group may be the EAS-3, and the EAS-3 may be forwarded by the EES-3 to the EES-0 via the EES-1.

Based on the foregoing example descriptions of various scenarios, this application provides a method for obtaining an edge computing service, as shown in FIG. 16. The method may be applied to a first EES, and the method may include the following steps.

Step 1601: A first EES receives information about at least one EES from a second entity, where the information about the at least one EES is used to determine an EES that can provide an edge computing service for the second entity.

Optionally, the second entity may be a first EEC.

Step 1601 is an action corresponding to step 1501. For this step, refer to related descriptions in step 1501. Details are not described herein again.

Optionally, the method may further include step 1602: The first EES obtains information about at least one edge application server EAS, where the at least one EAS can provide the edge computing service for a first AC. The information about the at least one EAS may be determined by the first EES and/or the at least one EES, and the at least one EAS corresponds to the first EES and/or the at least one EES.

For example, the embodiment corresponding to FIG. 6 is used as an example, the first EES may be the EES-1, and the information about the at least one EAS may include the information about the EAS-1 and the EAS-3.

Optionally, the method may further include step 1603: The first EES sends the information about the at least one EAS to the first EEC. For this step, refer to descriptions in step 1502. Details are not described herein again.

For the solution corresponding to FIG. 16, there are the following two possible implementations.

In a first implementation, that the first EES sends the information about the at least one EAS to the first EEC may specifically include: The first EES sends the information about the at least one EAS and information about a first group associated with a first EAS in the at least one EAS to the first EEC. The first EAS is used to provide the edge computing service for UE included in the first group. That is, the first EAS is a common EAS corresponding to the first group. Based on the first implementation, the common EAS corresponding to the first group may be indicated by the first EES to the first EEC.

Based on the first implementation, before step 1602, the method may further include the following steps:
Step 1604: The first EES receives first service information from the first EEC.
Step 1605: The first EES sends the first service information to the at least one EES.
Step 1606: The first EES receives the information about the first group from the first EEC.
Step 1607: The first EES sends the information about the first group of the first EEC to the at least one EES.

For the information about the first group and the first service information, refer to the foregoing descriptions. Details are not described herein again.

For example, first UE is the UE-1, the first EEC is the EEC-1, and the first EES is the EES-1. For step 1604 to step 1607, refer to related descriptions in the embodiment corresponding to FIG. 6. Details are not described herein again.

In a second implementation, the information that is about the at least one EAS and that is sent by the first EES does not include the first EAS associated with the information about the first group. That is, the first EES or another EES has not determined an EAS to be used by the first group.

Based on the second implementation, before step 1602, the method may further include the following steps:
Step 1608: The first EES receives the first service information from the first EEC, where the first service information is used to determine the at least one EAS.
Step 1609: The first EES sends the first service information to the at least one EES.
Step 1608 is the same as step 1604, and step 1609 is the same as step 1605. Refer to the foregoing descriptions.

After step 1602, the method may further include the following steps:
Step 1610: The first EES receives the information about the first group and information about the first EAS from the first EEC, where the first EAS is used to provide the edge computing service for the UE included in the first group.
Step 1611: The first EES sends the information about the first group and the information about the first EAS to the at least one EES.

It should be understood that, for example, the first UE is the UE-1, the first EEC is the EEC-1, the first EES is the EES-1, and the first group is the group 1. Refer to FIG. 6. If the first EES performs the solution in the second implementation, step 605 and step 607 do not include the information about the group 1.

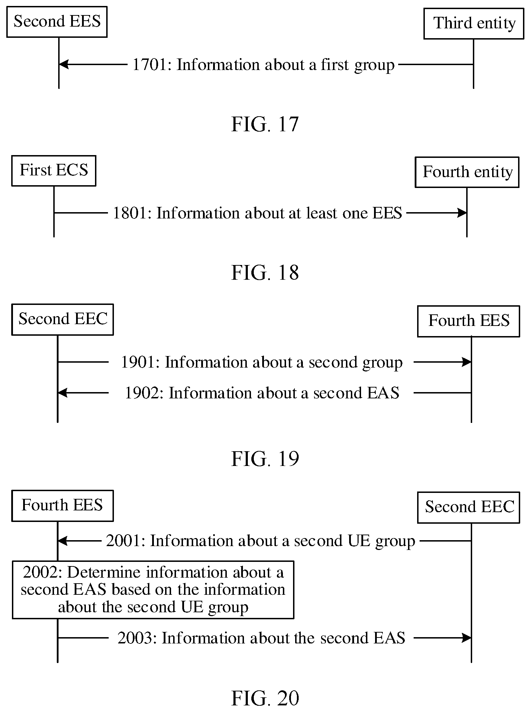

Based on the foregoing example descriptions of various scenarios, this application provides a method for obtaining an edge computing service, as shown in FIG. 17. The method may be applied to a second EES, and the method may include the following step.

Step 1701: The second EES receives information about a first group from a third entity, where the information about the first group is used to determine an EAS that provides an edge computing service for UE included in the first group.

Optionally, the third entity may be a first EES.

Optionally, the method further includes step 1702: The second EES sends information about a first EAS to the first EES, where the first EAS is configured to provide the edge computing service for the UE included in the first group.

For the solution corresponding to FIG. 17, there are the following two possible implementations.

In a first implementation, the first EAS may be associated with the second EES. The method may further include step 1703: The second EES determines that the first EAS is configured to provide the edge computing service for the UE included in the first group. In other words, the first EAS that can provide the edge computing service for the UE in the first group may be determined and sent by the second EES.

In a second implementation, the first EAS may be determined by a first EEC. In this case, that the second EES receives the information about the first group from the first EES specifically includes: The second EES receives the information about the first group and the information about the first EAS from the first EES. The first EAS is configured to provide the edge computing service for the UE included in the first group.

For example, refer to FIG. 6. The second EES may be the EES-3, and the first EAS may be the EAS-3. For related descriptions, refer to the method embodiment corresponding to FIG. 6.

Based on the foregoing example descriptions of various scenarios, this application provides a method for obtaining an edge computing service, as shown in FIG. 18. The method may be applied to a first ECS, and the method may include the following step.

Step 1801: The first ECS sends information about at least one EES to a fourth entity, where the at least one EES can provide an edge computing service for the fourth entity.

Optionally, the fourth entity is a first EEC.

Optionally, the method may further include the following steps.

Step 1802: The first ECS receives, from the first EEC, at least one of location information of first UE, EDN information expected by the first EEC, and information about a first AC. The first EEC and the first AC are deployed in the first UE.

Step 1803: The first ECS determines the information about the at least one EES based on at least one of the location information of the first UE, the EDN information expected by the first EEC, and the information about the first AC.

For example, the first ECS may be the ECS in FIG. 6, and the first EEC may be the EES-1 in FIG. 6. For actions of the first ECS, refer to related descriptions of actions performed by the ECS in the method embodiment corresponding to FIG. 6. Details are not described herein again.

Based on the foregoing example descriptions of various scenarios, this application provides a method for obtaining an edge computing service, as shown in FIG. 19. The method may be applied to a second EEC, and the method may include the following steps.

Step 1901: The second EEC sends information about a second group to a fourth EES, where the information about the second group is used to determine an EAS that provides an edge computing service for UE included in the second group.

Optionally, the second EEC may be an edge enabler client deployed in second UE, and the second UE is the UE in the second group. The fourth EES is an EES directly subscribed to by the second EEC.

For example, as shown in FIG. 14, the second EEC may be the EEC-0, and the fourth EES may be the EES-1 or the EES-3. Step 1901 may be implemented by using step 1407 or step 1409. Refer to related descriptions in the embodiment corresponding to FIG. 14. Details are not described herein again.

Step 1902: The second EEC receives information about a second EAS from the fourth EES, where the second EAS can provide the edge computing service for the UE included in the second group.

For example, as shown in FIG. 14, the second EEC may be the EEC-0, and the fourth EES is the EES-1 or the EES-3. The second EAS may be the EAS-1 or the EAS-3, where the EAS-1 is associated with the EES-1, and the EAS-3 is associated with the EES-3. Step 1901 may be implemented by using step 1408 or step 1410. Refer to related descriptions in the embodiment corresponding to FIG. 14. Details are not described herein again.

Optionally, for different fourth EESs, step 1902 may be performed a plurality of times, so that the second EEC may obtain a plurality of EASs that can provide the edge computing service for the UE included in the second group. Then, the second EEC may select an EAS from the plurality of EASs as a common EAS corresponding to the second group.

Optionally, the method may further include step 1903: The second EEC sends second service information to the fourth EES. The second service information is service information corresponding to a second AC. For the second service information, refer to the foregoing related descriptions of the first service information. The second service information and the first service information are similar (the second AC may be replaced with the first AC). Details are not described herein again.

Optionally, the second AC may be an application client deployed in the second UE, and the second AC, the second EEC, and the second UE may be considered as a same body.

Optionally, the second service information may also be used to determine the EAS that provides the edge computing service for the UE included in the second group. When determining the second EAS, the fourth EES may determine the second EAS with reference to the second service information, so that the determined second EAS can better meet a service requirement of the UE included in the second group.

It should be understood that, for the second service information, refer to related descriptions of the service information corresponding to the AC-1 in the method embodiment corresponding to FIG. 6. Details are not described herein again.

Optionally, the method may further include the following steps.

Step 1904: The second EEC receives information about a plurality of EESs from the second ECS. The information about the plurality of EESs may be information about available EESs determined by the second ECS for the second EEC. For step 1905, refer to related descriptions in step 603. Details are not described herein again.

Step 1905: The second EEC determines the fourth EES. The fourth EES may be an EES that is to be used and that is determined by the second EEC. For step 1905, refer to related descriptions in step 604. Details are not described herein again.

It should be noted that, for interaction between the second ECS and the second EEC, refer to interaction between the first ECS and the first EEC, and for actions performed by the second ECS, refer to the foregoing actions performed by the first ECS. Details are not described herein again.

Based on the foregoing example descriptions of various scenarios, this application provides a method for obtaining an edge computing service, as shown in FIG. 20. The method may be applied to a fourth EES. The method may include the following steps.

Step 2001: The fourth EES receives information about a second group from a second EEC.

Step 2002: The fourth EES determines information about a second EAS based on the information about the second group, where the second EAS can provide an edge computing service for UE included in the second group.

Step 2003: The fourth EES sends the information about the second EAS to the second EEC.

For the information about the second group, refer to related descriptions of the information about the group 1 in the embodiment corresponding to FIG. 6. For the information about the second EAS, refer to related descriptions of the information about the at least one EAS in the embodiment corresponding to FIG. 6. Details are not described herein again.

Optionally, the method may further include step 2004: The fourth EES receives second service information from the second EEC. In this case, step 2002 may be specifically: The fourth EES determines the information about the second EAS based on the information about the second group and the second service information. For the second service information, refer to related descriptions of the service information corresponding to the AC-1 in the embodiment corresponding to FIG. 6. Details are not described herein again.

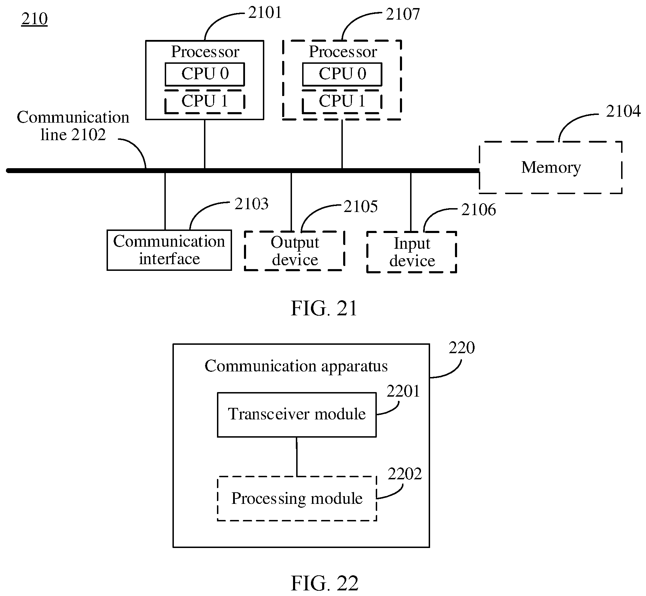

Optionally, an EEC, an EES, and an ECS in embodiments of this application may use a composition structure shown in FIG. 21 or include components shown in FIG. 21. FIG. 21 is a diagram of a structure of a communication apparatus 210 according to an embodiment of this application. As shown in FIG. 21, the communication apparatus 210 includes one or more processors 2101, a communication line 2102, and at least one communication interface (in FIG. 21, that the communication apparatus 210 includes a communication interface 2103 and one processor 2101 is merely an example for description). Optionally, the communication apparatus 210 may further include a memory 2104.

The processor 2101 may be a general-purpose central processing unit (central processing unit, CPU), a microprocessor, an application-specific integrated circuit (application-specific integrated circuit, ASIC), or one or more integrated circuits configured to control program execution of the solution in this application.

The communication line 2102 may include a path used for communication between different components.

The communication interface 2103 may be a transceiver module configured to communicate with another device or a communication network such as the Ethernet, a RAN, or a wireless local area network (wireless local area network, WLAN). For example, the transceiver module may be an apparatus such as a transceiver or a transceiver machine. Optionally, the communication interface 2103 may alternatively be a transceiver circuit located inside the processor 2101, and is configured to implement signal input and signal output of the processor.

The memory 2104 may be an apparatus having a storage function. For example, the memory 2104 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic storage medium or another magnetic storage device, or any other medium that can be used to carry or store expected program code in a form of instructions or a data structure and that can be accessed by a computer. However, this is not limited thereto. The memory may exist independently, and is connected to the processor through the communication line 2102. Alternatively, the memory may be integrated with the processor.

The memory 2104 is configured to store computer-executable instructions for performing the solutions in this application, and the processor 2101 controls execution of the computer-executable instructions. The processor 2101 is configured to execute the computer-executable instructions stored in the memory 2104, to implement the communication method provided in embodiments of this application.

Alternatively, optionally, in this embodiment of this application, the processor 2101 may perform processing-related functions in the communication methods provided in the following embodiments of this application. The communication interface 2103 is responsible for communicating with another device or a communication network. This is not specifically limited in this embodiment of this application.

Optionally, the computer-executable instructions in embodiments of this application may also be referred to as application program code. This is not specifically limited in embodiments of this application.

During specific implementation, in an embodiment, the processor 2101 may include one or more CPUs, for example, a CPU 0 and a CPU 1 in FIG. 21.

During specific implementation, in an embodiment, the communication apparatus 210 may include a plurality of processors, for example, the processor 2101 and a processor 2107 in FIG. 21. Each of the processors may be a single-core (single-core) processor or a multi-core (multi-core) processor. The processor herein may include but is not limited to at least one of the following various computing devices that run software: a central processing unit (central processing unit, CPU), a microprocessor, a digital signal processor (DSP), a microcontroller unit (microcontroller unit, MCU), an artificial intelligence processor, or the like. Each computing device may include one or more cores configured to perform an operation or processing by executing software instructions.

During specific implementation, in an embodiment, the communication apparatus 210 may further include an output device 2105 and an input device 2106. The output device 2105 communicates with the processor 2101, and may display information in a plurality of manners. For example, the output device 2105 may be a liquid crystal display (liquid crystal display, LCD), a light emitting diode (light emitting diode, LED) display device, a cathode ray tube (cathode ray tube, CRT) display device, a projector (projector), or the like. The input device 2106 communicates with the processor 2101, and may receive user input in a plurality of manners. The communication apparatus 210 sometimes may also be referred to as a communication apparatus, and may be a general-purpose device or a dedicated device. For example, the communication apparatus 210 may be a desktop computer, a portable computer, a network server, a personal digital assistant (personal digital assistant, PDA), a mobile phone, a tablet computer, a wireless terminal device, an embedded device, the foregoing terminal device, the foregoing network device, or a device having a structure similar to the structure shown in FIG. 21. A type of the communication apparatus 210 is not limited in this embodiment of this application.

Optionally, the actions of the EEC in the foregoing method embodiment may be performed by the processor 2101 in the communication apparatus 210 shown in FIG. 21 by invoking the application program code stored in the memory 2104, to instruct the EEC to perform the actions, the actions of the EES may be performed by the processor 2101 in the communication apparatus 210 shown in FIG. 21 by invoking the application program code stored in the memory 2104, to instruct the EES to perform the actions, the actions of the ECS may be performed by the processor 2101 in the communication apparatus 210 shown in FIG. 21 by invoking the application program code stored in the memory 2104, to instruct the ECS to perform the actions.

Optionally, an embodiment of this application further provides another communication apparatus. The communication apparatus is configured to implement the foregoing methods. The communication apparatus may be a target node in the foregoing method embodiments, or an apparatus including the foregoing target node, or a component that can be used for the target node. It may be understood that, to implement the foregoing functions, the communication apparatus includes a corresponding hardware structure and/or a corresponding software module for performing each function. A person skilled in the art should be easily aware that units and algorithm steps in the examples described with reference to embodiments disclosed in this specification can be implemented in a form of hardware or a combination of hardware and computer software in this application. Whether a function is executed by hardware or hardware driven by computer software depends on specific applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that the module division in this embodiment of this application is an example, and is merely logical function division. During actual implementation, there may be another division manner.

FIG. 22 is a diagram of a structure of a communication apparatus 220. The communication apparatus 220 may include a transceiver module 2201. The transceiver module 2201 may also be referred to as a transceiver unit, and is configured to implement a transceiver function. For example, the transceiver module 2201 may be a transceiver circuit, a transceiver, a transceiver machine, or a communication interface. Optionally, the communication apparatus 220 may further include a processing module 2202.

That the communication apparatus 220 is the first EEC in the foregoing method embodiment is used as an example.

The transceiver module 2201 may be configured to send information about at least one EES to a first entity, where the at least one EES can provide an edge computing service for the first EEC. The transceiver module 2201 may be configured to receive information about at least one EAS from the first entity, where the at least one EAS is associated with the first entity and/or at least one EES, and the at least one EAS can provide the edge computing service for a first AC.

Optionally, the transceiver module 2201 may be further configured to send information about a first group to a first EES, where the information about the first group may be used to determine an EAS that provides the edge computing service for UE included in the first group.

Optionally, the transceiver module 2201 may be further configured to receive the information about the first group, where the information about the first group is associated with a first EAS in the at least one EAS, and the first EAS can provide the edge computing service for the UE included in the first group.

Optionally, the processing module 2202 may be further configured to determine the first EAS from the at least one EAS for the first EEC, where the first EAS can provide the edge computing service for the UE included in the first group.

Optionally, the transceiver module 2201 may be further configured to send information about the first EAS to the first EES.

Optionally, the transceiver module 2201 may be further configured to send first service information to the first EES, where the first service information is used to determine the at least one EAS.

Optionally, the transceiver module 2201 may be further configured to receive the information about the at least one EES from a first edge configuration server ECS.

Optionally, the processing module 2202 may be further configured to: determine, based on the information about the at least one EES received from the first ECS, the information about the at least one EES to be sent to the first entity.

That the communication apparatus 220 is the first EES in the foregoing method embodiment is used as an example.

The transceiver module 2201 may be configured to receive information about at least one EES from a second entity, where the information about the at least one EES is used to determine an EES that can provide an edge computing service for the second entity.

Optionally, the transceiver module 2201 may be further configured to send information about at least one EAS to a first EEC, where the at least one EAS can provide the edge computing service for a first AC.

Optionally, the transceiver module 2201 may be further configured to receive information about a first group from the first EEC, where the information about the first group indicates information about user equipment UE included in the first group.

Optionally, the transceiver module 2201 may be further configured to send the information about the first group to the at least one EES.

Optionally, the transceiver module 2201 may be further configured to send the information about the first group associated with a first EAS to the first EEC, where the first EAS is an EAS in the at least one EAS, and the first EAS can provide the edge computing service for the UE included in the first group.

Optionally, the transceiver module 2201 may be further configured to receive information about the first EAS from the first EEC, where the first EAS belongs to the at least one EAS, and the first EAS can provide the edge computing service for the UE included in the first group.

Optionally, the transceiver module 2201 may be further configured to send the information about the first EAS to the at least one EES.

Optionally, the transceiver module 2201 may be further configured to receive first service information from the first EEC, where the first service information is used to determine the at least one EAS.

Optionally, the transceiver module 2201 may be further configured to send the first service information to the at least one EES.

That the communication apparatus 220 is the second EES in the foregoing method embodiment is used as an example.

The transceiver module 2201 may be configured to receive information about a first group from a third entity, where the information about the first group may be used to determine an EAS that provides an edge computing service for UE included in the first group.

Optionally, the transceiver module 2201 may be further configured to send information about a first EAS to a first EES, where the first EAS can provide the edge computing service for the UE included in the first group.

Optionally, the transceiver module 2201 may be further configured to receive the information about the first EAS from the first EES, where the first EAS can provide the edge computing service for the UE included in the first group.

Optionally, the transceiver module 2201 may be further configured to receive first service information from the first EES, where the first service information is used to determine the first EAS.

That the communication apparatus 220 is the first ECS in the foregoing method embodiment is used as an example.

The transceiver module 2201 may be configured to send information about at least one EES to a fourth entity, where the at least one EES can provide an edge computing service for the fourth entity.

Optionally, the transceiver module 2201 may be further configured to receive location information of first UE from a first EEC, where the location information of the first UE is used to determine the information about the at least one EES.

Optionally, the transceiver module 2201 may be further configured to: receive, from the first EEC, EDN information, edge computing service level information, or EES service level information expected by the first UE. The EDN information, the edge computing service level information, or the EES service level information expected by the first UE is used to determine the information about the at least one EES.

Optionally, the processing module 2202 may be configured to: determine, based on the location information of the first UE, an EDN available to the first UE. In addition, the processing module 2202 may be further configured to: determine, according to policy information, information about a plurality of EESs from the EDN available to the first UE.

It should be noted that all related content of the steps in the foregoing method embodiments may be cited in function descriptions of corresponding functional modules. Details are not described herein again. Because the communication apparatus 220 provided in this embodiment may perform the foregoing communication method, for a technical effect that can be achieved by the communication apparatus 220, refer to the foregoing method embodiments. Details are not described herein again.

Optionally, the EEC, the EES, or the ECS in this embodiment of this application may also be referred to as communication apparatuses, and each may be a general-purpose device or a dedicated device. This is not specifically limited in this embodiment of this application.

In this embodiment, the communication apparatus 220 is presented in a form of functional modules obtained through division in an integrated manner. The "module" herein may be a specific ASIC, a circuit, a processor that executes one or more software or firmware programs, a memory, an integrated logic circuit, and/or another component that can provide the foregoing functions. In a simple embodiment, a person skilled in the art may figure out that the communication apparatus 220 may be in a form of the communication apparatus 210 shown in FIG. 21.

For example, the processor 2101 in the communication apparatus 210 shown in FIG. 21 may invoke the computer-executable instructions stored in the memory 2104, to enable the communication apparatus 210 to perform the communication method in the foregoing method embodiments.

Specifically, functions/implementation processes of the transceiver module 2201 and the processing module 2202 in FIG. 22 may be implemented by the processor 2101 in the communication apparatus 210 shown in FIG. 21 by invoking the computer-executable instructions stored in the memory 2104. Alternatively, a function/implementation process of the transceiver module 2201 in FIG. 22 may be implemented by the communication interface 2103 in the communication apparatus 210 shown in FIG. 21. A function/implementation process of the processing module 2202 in FIG. 22 may be implemented by the processor 2101 in the communication apparatus 210 shown in FIG. 21 by invoking the computer-executable instructions stored in the memory 2104.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person skilled in the art should easily be aware that units and algorithm steps in the examples described with reference to embodiments disclosed in this specification can be implemented by electronic hardware or a combination of computer software and electronic hardware. Whether the functions are executed by hardware or software depends on specific applications and design constraint conditions of the technical solutions. A person skilled in the art may use different methods to implement the described functions for each particular application, but it should not be considered that the implementation goes beyond the scope of this application.

A person skilled in the art may clearly understand that, for a purpose of convenient and brief description, for detailed working processes of the foregoing systems, apparatuses, and units, refer to corresponding processes in the foregoing method embodiments. Details are not described herein again.

In the several embodiments provided in this application, it should be understood that the disclosed systems, devices, and methods may be implemented in other manners. For example, the described device embodiment is merely an example. For example, division into the units is merely logical function division and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units are integrated into one unit.

All or some of the foregoing embodiments may be implemented by software, hardware, firmware, or any combination thereof. When a software program is used for implementation, all or some of the foregoing embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium that can be accessed by a computer, or a data storage device that is integrated by one or more usable media, such as a server or a data center. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

Terms such as "component", "module", and "system" used in this application are used to indicate computer-related entities. The computer-related entities may be hardware, firmware, a combination of hardware and software, software, or software in running. For example, a component may be but is not limited to a process that runs on a processor, a processor, an object, an executable file, a thread of execution, a program, and/or a computer. As an example, both a computing device and an application that runs on the computing device may be components. One or more components may reside within a process and/or a thread of execution, and the components may be located on one computer and/or distributed between two or more computers. In addition, these components may be executed in various computer-readable media that have various data structures. These components may communicate by using a local and/or remote process and based on, for example, a signal having one or more data packets (for example, data from one component, where the component interacts with another component in a local system or a distributed system, and/or interacts with another system over a network such as the Internet via a signal).

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the word "for example" is used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, information (information), a signal (signal), a message (message), or a channel (channel) may be interchangeably used sometimes. It should be noted that expressed meanings are consistent when differences between the terms are not emphasized. "Of (of)", "relevant (relevant)", and "corresponding (corresponding)" may be interchangeably used sometimes. It should be noted that meanings expressed by the terms are consistent when differences between the terms are not emphasized. A "system" and a "network" may be interchangeably used sometimes. Meanings expressed by the terms are consistent when differences between the terms are not emphasized. For example, a "communication network" also means a "communication system".

A network architecture and a service scenario described in embodiments of this application are intended to describe the technical solutions in embodiments of this application more clearly, but do not constitute a limitation on the technical solutions provided in embodiments of this application. A person of ordinary skill in the art may know that with evolution of the network architecture and emergence of new service scenarios, the technical solutions provided in embodiments of this application are also applicable to similar technical problems.

The foregoing descriptions are merely specific implementations of this application, but are not intended to limit a protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for obtaining an edge computing service, wherein the method comprises:
receiving, by a first edge enabler server EES, information about a user equipment UE group, information about at least one EES, and information about at least one EAS from a first edge enabler client EEC, wherein a second EES in the at least one EES serves UE comprised in the UE group, and the at least one EAS corresponds to the second EES and serves the UE comprised in the UE group; and
sending, by the first EES, the information about the EAS to the at least one EES.

2. The method according to claim 1, wherein the information about the UE group comprises an identifier of the UE group.

3. The method according to claim 1 or 2, wherein the information about the at least one EES comprises address information of the at least one EES.

4. A method for obtaining an edge computing service, wherein the method comprises:
receiving, by a first edge enabler server EES, information about at least one EES from a first edge enabler client EEC, wherein the information about the at least one EES is configured to determine an EES that can provide an edge computing service for the first EEC.

5. The method according to claim 4, wherein the method further comprises:
sending, by the first EES, information about at least one EAS to the first EEC, wherein the at least one EAS can provide the edge computing service for a first application client AC.

6. The method according to claim 4 or 5, wherein the method further comprises:
receiving, by the first EES, information about a first group from the first EEC, wherein the information about the first group indicates information about user equipment UE comprised in the first group.

7. The method according to claim 6, wherein the method further comprises:
sending, by the first EES, the information about the first group to the at least one EES, wherein the information about the first group comprises a group identifier and/or a UE list.

8. The method according to claim 6 or 7, wherein the method further comprises:
sending, by the first EES to the first EEC, information about a first group associated with a first EAS, wherein the first EAS is an EAS in the at least one EAS, and the first EAS can provide the edge computing service for the UE comprised in the first group.

9. The method according to claim 8, wherein the first EAS corresponds to the first EES, and information about the first EAS is determined by the first EES.

10. The method according to claim 8, wherein the first EAS corresponds to a second EES in the at least one EES, the second EES can provide the edge computing service for the UE comprised in the first group, and the information about the first EAS is received by the first EES from the second EES.

11. The method according to any one of claims 8 to 10, wherein the method further comprises:
receiving, by the first EES, the information about the first EAS from the first EEC, wherein the first EAS belongs to the at least one EAS, and the first EAS can provide the edge computing service for the UE comprised in the first group.

12. The method according to any one of claims 7 to 11, wherein the method further comprises:
sending, by the first EES, the information about the first EAS to the at least one EES.

13. The method according to any one of claims 4 to 12, wherein the method further comprises:
receiving, by the first EES, first service information from the first EEC, wherein the first service information is used to determine the at least one EAS.

14. The method according to claim 13, wherein the method further comprises:
sending, by the first EES, the first service information to the at least one EES.

15. The method according to any one of claims 4 to 14, wherein deployment information corresponding to the EES comprises at least one of the following: EDN information of the EES, a topology service range of the EES, a geographic service range of the EES, a data network access identifier DNAI corresponding to the EES, or a level to which the EES belongs.

16. A method for obtaining an edge computing service, wherein the method comprises:
receiving, by a second edge enabler server EES, information about a first group from a first EES, wherein the information about the first group is used to determine an edge application server EAS that provides an edge computing service for UE comprised in the first group.

17. The method according to claim 16, wherein the method further comprises:
sending, by the second EES, information about a first EAS to the first EES, wherein the first EAS can provide the edge computing service for the UE comprised in the first group.

18. The method according to claim 17, wherein the first EAS corresponds to the second EES, and the first EAS is determined by the second EES.

19. The method according to any one of claims 16 to 18, wherein the method further comprises:
receiving, by the second EES, the information about the first EAS from the first EES, wherein the first EAS can provide the edge computing service for the UE comprised in the first group.

20. The method according to any one of claims 16 to 19, wherein the method further comprises:
receiving, by the second EES, first service information from the first EES, wherein the first service information is used to determine the first EAS.

21. A method for obtaining an edge computing service, wherein the method comprises:
sending, by a first edge enabler client EEC, information about at least one EES to a first edge enabler server EES, wherein the at least one EES can provide an edge computing service for the first EEC; and
receiving, by the first EEC, information about at least one edge application server EAS from the first EES, wherein the at least one EAS corresponds to the first EES and/or the at least one EES, and the at least one EAS can provide the edge computing service for a first application client AC.

22. The method according to claim 21, wherein the method further comprises:
sending, by the first EEC, information about a first group to the first EES, wherein the information about the first group is used to determine an EAS that provides the edge computing service for user equipment UE comprised in the first group, and the information about the first group comprises a group identifier and/or a UE list.

23. The method according to claim 21 or 22, wherein the method further comprises:
receiving, by the first EEC, the information about the first group, wherein the information about the first group is associated with a first EAS in the at least one EAS, and the first EAS can provide the edge computing service for the UE comprised in the first group.

24. The method according to any one of claims 21 to 23, wherein the first EAS corresponds to a second EES in the at least one EES, and the second EES can provide the edge computing service for the UE comprised in the first group.

25. The method according to claim 21 or 22, wherein the method further comprises:
determining, by the first EEC, a first EAS from the at least one EAS, wherein the first EAS can provide the edge computing service for the UE comprised in the first group; and
sending, by the first EEC, information about the first EAS to the first EES, wherein
the first EAS corresponds to the first EES.

26. The method according to any one of claims 21 to 25, wherein the method further comprises:
sending, by the first EEC, first service information to the first EES, wherein the first service information is used to determine the at least one EAS.

27. The method according to any one of claims 21 to 26, wherein information about any EES in the information about the at least one EES comprises at least one of the following: identification information of the EES, address information of the EES, or deployment information corresponding to the EES.

28. The method according to any one of claims 21 to 27, wherein the method further comprises:
receiving, by the first EEC, information about the at least one EES from a first edge configuration server ECS.

29. The method according to claim 28, wherein the method further comprises:
determining, by the first EEC based on the information about the at least one EES received from the first ECS, the information about the at least one EES to be sent to the first EES.

30. A method for obtaining an edge computing service, wherein the method comprises:
sending, by a first edge configuration server ECS, information about at least one edge enabler server EES to a first edge enabler client EEC, wherein the at least one EES can provide an edge computing service for the first EEC.

31. The method according to claim 30, wherein information about any EES in the information about the at least one EES comprises at least one of the following: identification information of the EES, address information of the EES, or deployment information corresponding to the EES.

32. A communication apparatus, wherein the communication apparatus comprises a processor and a memory; and
the memory is configured to store computer-executable instructions, and when the processor executes the computer-executable instructions, the communication apparatus is enabled to perform the method according to any one of claims 1 to 31.

33. A computer-readable storage medium, wherein the computer-readable storage medium stores a computer program, and when the computer program is executed by a computer, the computer is enabled to perform the method according to any one of claims 1 to 31.

34. A communication system, comprising:
one or more communication apparatuses configured to perform the method according to any one of claims 1 to 31.
